# EUROPEAN PATENT APPLICATION

(11) **EP 2 881 375 A1**
(43) Date of publication of application: **10.06.2015**
(21) Application number: 13807396.0
(22) Date of filing: 18.06.2013
(51) Int. Cl.: C03C 23/00, C03C 3/083, C03C 3/085, C03C 3/087, C03C 3/091, C03C 3/093

(54) **METHOD FOR SURFACE-PROCESSING GLASS SUBSTRATE, AND GLASS SUBSTRATE**

(30) Priority: 22.06.2012 JP 2012141139; 07.09.2012 JP 2012197235; 13.11.2012 JP 2012249337
(71) Applicant: Asahi Glass Company, Limited, Tokyo 100-8405 (JP)
(72) Inventor: FUNATSU, Shiro, Tokyo 100-8405 (JP); KOIKE, Akio, Tokyo 100-8405 (JP); YAMAMOTO, Kiyoshi, Tokyo 100-8405 (JP); YAMAMOTO, Yuichi, Tokyo 100-8405 (JP); WAKATSUKI, Hiroshi, Tokyo 100-8405 (JP); NISHII, Junji, Sapporo-shi, Hokkaido 060-0808 (JP); HARADA, Kenji, Kitami-shi, Hokkaido 090-0015 (JP); IKEDA, Hiroshi, Sapporo-shi, Hokkaido 060-0808 (JP); SAKAI, Daisuke, Kitami-shi, Hokkaido 090-0015 (JP)
(74) Representative: Müller-Boré & Partner Patentanwälte PartG mbB
(86) International application number: PCT/JP2013/066681
(87) International publication number: WO 2013/191164

(57) **Abstract**

A method capable of forming a sufficiently thick low alkali concentration region without heating glass to a high temperature and even in an atmosphere which is not an atmosphere of plasma formation gas such as helium and argon, is provided. A glass substrate having a pair of main surfaces and being made of glass containing an alkali oxide in its composition, is disposed between a first electrode and a second electrode so that one main surface is separated from the first electrode and the other main surface is brought into contact with the second electrode, and a corona discharge is generated by applying a direct-current voltage to the first electrode as a positive electrode and the second electrode as a negative electrode, in a positive-electrode-side surface layer portion of the glass substrate, at least one positive ion including an alkali ion migrates toward the negative-electrode-side.

## Description

### TECHNICAL FIELD

The present invention relates to a surface treatment method of a glass substrate and a glass substrate, and more specifically relates to a surface treatment method of a glass substrate having a high content ratio of an alkali oxide, and a surface-treated glass substrate. Further, the present invention relates to a method of performing treatment on a surface of a glass substrate to form a pattern of regions each having a low content ratio of an alkali ion and the like, and a glass substrate having the pattern of regions each having the low content ratio of the alkali ion and the like.

### BACKGROUND ART

Although glass containing an alkali oxide and an alkali earth oxide has been conventionally used for various purposes because of an easiness of processing, an easiness of forming and the like, there is a possibility of elution of an alkali ion and an alkali earth ion to a glass surface. If the elution of the alkali ion and the like to the glass surface occurs, a change of color of glass such as a whitening of glass, which is so-called dimming, and a deterioration of coating such as an anti-reflection film are easily caused, and further, in a field of electronics, there is a possibility of contaminating a semiconductor. For this reason, it is demanded to form, on the glass surface, a dealkalized layer in which an alkali ion and the like do not substantially exist or a content ratio of the alkali ion and the like is low.

Further, in recent years, it has been demanded that, in an optical waveguide forming a refractive index difference by making an alkali component on a glass surface to be subjected to ion-exchange in a pattern form, the aforementioned dealkalized layer is formed in a pattern form Specifically, when the ion-exchange is performed at a temperature equal to or less than a glass transition point, the deeper the dealkalized layer is formed from the glass surface, the smaller an ion-exchange amount in this portion becomes, so that by forming the dealkalized layer with a predetermined depth in a pattern form, a refractive index on the glass surface can be changed depending on portions. Note that in the present specification, "pattern" is set to indicate that a plurality of portions having a predetermined planar shape exist at a predetermined arrangement.
Further, a content ratio of ion is also referred to as "concentration", and a region having a low content ratio of an alkali ion and the like is referred to as "low alkali concentration region".

As a method of preventing the elution of the alkali ion and the like from the glass surface, there has been proposed a method in which a glass sheet whose sum of a content of alkali oxide and a content of alkali earth oxide is equal to or less than a predetermined amount (15 mass%) is disposed between a pair of electrodes with a predetermined distance provided between the glass sheet and the respective electrodes, a corona discharge is generated between the electrodes, and by an effect of electric field generated between the electrodes, a dealkalized layer in which the alkali ion does not substantially exist is formed on a surface of the glass sheet (refer to Patent Reference 1, for example).

Further, Patent Reference 2 discloses a method in which an anode being a hydrogen ion generating electrode and a cathode being an oxide acceptor of alkali ion are closely brought into contact with surfaces of a glass substrate, respectively, and a direct current is applied between the electrodes in a hydrogen-containing atmosphere while performing heating, thereby removing the alkali ion from the glass substrate.

However, in the method described in Patent Reference 1, a thickness of the dealkalized layer capable of being formed is thin (normally, less than 0.5 µm), and thus it was not possible to form the dealkalized layer with a sufficient thickness. Further, since there is a need to heat the glass sheet to a high temperature (at least 450°C), there was a possibility of deformation of glass, and in addition to that, there was a need to make members of the treating apparatus have a heat resistance. Further, there was a need to perform the treatment in the atmosphere of plasma formation gas such as helium and argon.

Further, in the method described in Patent Reference 2, since both of the anode and the cathode are disposed by being closely brought into contact with the surfaces of the glass substrate, a dielectric breakdown easily occurs, and further, since there is a need to heat the glass substrate to a high temperature (400 to 1200°C), there was a possibility of deformation of the glass.
Further, in each of the method of Patent Reference 1 and the method of Patent Reference 2, it was not possible to form the dealkalized layer in a pattern form at a fine pitch.

Further, as a method of forming the dealkalized layer on the glass surface, there has also been proposed a method using a chemical wet process, a method of performing physical heating or the like, in addition to the electrical method such as the method in Patent Reference 1 and the method in Patent Reference 2, but, under the present circumstances, it was not possible to form the dealkalized layer in a fine pattern even with the use of these methods.

### RELEVANT REFERENCES

### Patent Reference

Patent Reference 1: JP-A H07-507762
Patent Reference 2: JP-A H0S-279087
Patent Reference 3: JP-B S52-38853

### Non-Patent Reference

Non-Patent Reference 1: Appl. Phys. Lett. 90 (2007) 061102.

### SUMMARY OF THE INVENTION

### PROBLEMS TO BE SOLVED BY THE INVENTION

The present invention is made for solving such problems, and an object thereof is to provide a method capable of forming a sufficiently thick low alkali concentration region without heating glass to a high temperature and even in an atmosphere which is not an atmosphere of plasma formation gas such as helium and argon, and to provide a glass substrate on which a sufficiently thick low alkali concentration region is formed.
Further, the present invention has an object to provide a method capable of forming sufficiently thick low alkali concentration regions each having a low concentration of an alkali ion and the like, on a glass substrate, in a pattern form, and to provide a glass substrate on which low alkali concentration regions each having a sufficient thickness are formed in a pattern form

### MEANS FOR SOLVING THE PROBLEMS

In a first aspect of a surface treatment method of a glass substrate of the present invention, a glass substrate having a pair of main surfaces and being made of glass containing an alkali oxide in a chemical composition, is disposed between a first electrode and a second electrode so that one main surface is separated from the first electrode and the other main surface is brought into contact with the second electrode. Further, it is characterized in that a corona discharge is generated by applying a direct-current voltage by making the first electrode to be a positive electrode or a negative electrode and making the second electrode have a polarity opposite to that of the first electrode, and in a positive-electrode-side surface layer portion, close to the positive electrode, of the glass substrate, at least one kind of a positive ion including an alkali ion is made to migrate toward a side close to the negative electrode.

In the surface treatment method of the first aspect, it is preferable that the corona discharge is generated by applying the direct-current voltage by making the first electrode to be the positive electrode, and making the second electrode to be the negative electrode, and in the positive-electrode-side surface layer portion, close to the first electrode, of the glass substrate, at least one kind of the positive ion including the alkali ion is made to migrate toward a negative-electrode-side on which the glass substrate is brought into contact with the second electrode. Further, the positive electrode preferably has an electrode area smaller than that of the negative electrode. Further, the positive electrode is a wire-shaped electrode, and the wire-shaped electrode can be disposed in parallel to the one main surface of the glass substrate. Further, the positive electrode is a needle-shaped electrode, and the needle-shaped electrode can be disposed vertically with respect to the one main surface of the glass substrate.

A second aspect of a surface treatment method of a glass substrate of the present invention includes arranging a mask made of an insulating material and having through hole portions or ultrathin portions with a predetermined pattern, on one main surface of a glass substrate having a pair of main surfaces and containing an alkali oxide in a chemical composition, and generating a corona discharge. In the generation of the corona discharge, the glass substrate on which the mask is arranged is disposed between a first electrode and a second electrode to make a surface of the mask to be separated from the first electrode, and to make the other main surface of the glass substrate to be brought into contact with the second electrode. After that, a direct-current voltage is applied by making the first electrode to be a positive electrode and making the second electrode to be a negative electrode to generate the corona discharge. Further, in the generation of the corona discharge, at least one kind of a positive ion including an alkali ion is made to migrate toward a negative-electrode-side on which the glass substrate is brought into contact with the second electrode, in regions, corresponding to the through hole portions or the ultrathin portions of the mask, in a positive-electrode-side surface layer portion, close to the first electrode, of the glass substrate. Accordingly, it is characterized in that low alkali concentration regions each having a concentration of at least one kind of the positive ion lower than that of the other region, are formed in a pattern corresponding to the pattern of the through hole portions or the ultrathin portions of the mask.

In the surface treatment method of the second aspect, the mask may be a resin layer having a concave and convex pattern formed on a surface thereof at a predetermined pitch. Further, the mask may be a resin film on which a plurality of through holes are formed in a predetermined pattern Further, the first electrode preferably has an electrode area smaller than that of the second electrode. Further, it is preferable that the first electrode is a wire-shaped electrode, and the wire-shaped electrode is disposed in parallel to the one main surface of the glass substrate.

In the surface treatment method of the first aspect and the second aspect, it is possible to design such that the second electrode and the glass substrate are integrally formed, and made to make movement in parallel with respect to the first electrode. Further, the movement can include at least one kind of movement selected from a linear movement, a linear reciprocating movement, a rotary movement, and a swinging movement

A third aspect of a surface treatment method of a glass substrate of the present invention has a first electrode formed of a plurality of pieces of needle-shaped electrodes disposed in the same direction with a predetermined interval provided therebetween and at a predetermined arrangement Further, the third aspect includes disposing a glass substrate having a pair of main surfaces and containing an alkali oxide in a chemical composition between the first electrode and a second electrode to make one of the main surfaces to be vertical with respect to the needle-shaped electrodes forming the first electrode and make the one of the main surfaces to be separated from tip portions of the needle-shaped electrodes, and to make the other main surface to be brought into contact with the second electrode. Further, the third aspect includes generating a corona discharge by applying a direct-current voltage by making the first electrode to be a positive electrode and making the second electrode to be a negative electrode. Further, in the generation of the corona discharge, in regions, facing the tip portions of the respective needle-shaped electrodes, in a positive-electrode-side surface layer portion, close to the first electrode, of the glass substrate, at least one kind of a positive ion including an alkali ion is made to migrate toward the negative-electrode-side on which the glass substrate is brought into contact with the second electrode. Accordingly, it is characterized in that low alkali concentration regions each having a content ratio of at least one kind of the positive ion lower than that of the other region, are formed in a pattern corresponding to the arrangement of the needle-shaped electrodes.

In the surface treatment method of the third aspect, it is preferable that a tip angle being an angle of the tip portion of the needle-shaped electrode is 5 degrees to 25 degrees. Further, the second electrode may be an electrode made of a molten metal.

In the surface treatment method of the first aspect, the second aspect, and the third aspect, an atmosphere between the first electrode and the second electrode is preferably maintained in the atmosphere mainly formed of air or nitrogen. Further, the atmosphere between the first electrode and the second electrode can be maintained in the atmosphere containing gas which generates a hydrogen ion. Further, the gas that generates the hydrogen ion can be hydrogen gas. Further, a temperature of the glass substrate is preferably a room temperature to 400°C. Further, the glass substrate is preferably made of glass containing an alkali oxide and an alkali earth oxide whose ratio in total exceeds 15 mass%.

A glass substrate of the present invention being a glass substrate having a pair of main surfaces and being made of glass containing, in its composition, an alkali oxide and an alkali earth oxide whose ratio in total exceeds 15 mass%, is characterized in that it has a low alkali concentration region in which a content ratio of at least one kind of an alkali ion is lower than that of the other region, in a surface layer portion on a side of one of the main surfaces.

In the glass substrate of the present invention, a thickness of the low alkali concentration region is preferably greater than 0 µm and equal to or less than 10 µm. Further, the low alkali concentration region can be formed in a predetermined pattern Further, it is possible that the low alkali concentration region has a plurality of regions with different thicknesses, and the respective regions are formed in a predetermined pattern in a plane direction of the glass substrate. Further, the low alkali concentration region can have a proton concentration higher than that of the other region.

### EFFECT OF THE INVENTION

According to the surface treatment method of the first aspect, the second aspect, and the third aspect of the present invention, by making the first electrode to be the positive electrode and making the second electrode to be the negative electrode, it is possible to apply a sufficiently high voltage between the first electrode and the second electrode, resulting in that a sufficiently thick low alkali concentration region can be formed in the surface layer of the glass substrate by setting a temperature of the glass substrate to a temperature at which there is no possibility of deformation and deterioration of the glass and treating members. Further, it is possible to perform the treatment with the use of the corona discharge in the air or nitrogen atmosphere, without setting the atmosphere between the first electrode and the second electrode to the atmosphere of helium, argon or the like being the plasma formation gas.

According to the surface treatment method of the second aspect of the present invention, the mask made of the insulating material and having the through hole portions or the ultrathin portions formed thereon in the predetermined pattern, is arranged on the one main surface of the glass substrate. Further, the direct-current voltage is applied by making the first electrode disposed by being separated from the mask to be the positive electrode, and making the second electrode disposed by being brought into contact with the other main surface of the glass substrate to be the negative electrode, to generate the corona discharge, which enables to make at least one kind of the positive ion including the alkali ion migrate toward the negative-electrode-side in the regions, corresponding to the through hole portions or the ultrathin portions of the mask, in the positive-electrode-side surface layer portion of the glass substrate. Even in the positive-electrode-side surface layer portion of the glass substrate, in the region which is brought into contact with a mask main body portion except for the through hole portion or the ultrathin portion of the mask, there is no migration of the alkali ion and the like toward the negative-electrode-side, or an amount and a migration length of ion to be migrated are extremely small, so that the low alkali concentration region in which the concentration of the alkali ion and the like is lower than that of the other region is not formed, or the region whose depth is extremely shallow from the surface, namely, whose thickness is extremely thin, is formed. Therefore, the low alkali concentration regions can be formed in the positive-electrode-side surface layer portion of the glass substrate, in the pattern form corresponding to the pattern of the through hole portions or the ultrathin portions of the mask.

According to the surface treatment method of the third aspect of the present invention, the first electrode is formed of the plurality of pieces of needle-shaped electrodes disposed in the same direction with the predetermined interval provided therebetween and at the predetermined arrangement Further, the direct-current voltage is applied by making the first electrode disposed so that the tip potions of the needle-shaped electrodes are separated from the one main surface of the glass substrate being an object to be treated to be the positive electrode and making the second electrode disposed by being brought into contact with the other main surface of the glass substrate to be the negative electrode. This generates the corona discharge, resulting in that in the positive-electrode-side surface layer portion of the glass substrate, at least one kind of the positive ion including the alkali ion can be made to migrate toward the negative-electrode-side in the predetermined region which is the closest to and faces each of the needle-shaped electrodes such as a region right below the tip portion of each of the needle-shaped electrodes. Even in the positive-electrode-side surface layer portion of the glass substrate, in the region separated from the portion facing and right below the tip portion of each of the needle-shaped electrodes, there is no migration of the alkali ion and the like toward the negative-electrode-side almost at all, so that the low alkali concentration region in which the concentration of the alkali ion and the like is lower than that of the other region is not formed almost at all. Therefore, the low alkali concentration regions can be formed in the positive-electrode-side surface layer portion of the glass substrate in the pattern form corresponding to the arrangement of the needle-shaped electrodes.

According to the glass substrate of the present invention, since the surface layer portion of the substrate made of the glass whose concentration of the alkali oxide and the alkali earth oxide in total exceeds 15 mass% has the low alkali concentration region in which the concentration of the alkali ion is lower than that of the other region, the elution of the alkali ion and the like to the glass surface is prevented. Therefore, the dimming of glass and the deterioration of coating are prevented. Further, in the field of electronics in particular, there is no possibility of occurrence of problem such as a contamination of a semiconductor.

Further, according to the glass substrate of the present invention, since the pattern of the low alkali concentration regions each having the concentration of the alkali ion lower than that of the other region is formed in the surface layer portion of the substrate made of the glass containing the alkali oxide, it is possible to change a chemically strengthening level on the glass surface depending on an arbitrary portion. Therefore, by using this glass substrate, it is possible to obtain a chemically strengthened glass on which the plurality of regions having different strengthening levels are respectively formed in the pattern form

### BRIEF DESCRIPTION OF THE DRAWINGS

FIG. 1A is a front view illustrating a schematic configuration of one example of a surface treatment apparatus used in a first embodiment of the present invention.
FIG. 1B is a top view illustrating a disposition of a first electrode with respect to a glass substrate of one example of a surface treatment apparatus used in a first embodiment of the present invention.
FIG. 2A is a front view illustrating a schematic configuration of another example of the surface treatment apparatus used in the first embodiment of the present invention.
FIG. 2B is a top view illustrating a disposition of a first electrode with respect to a glass substrate of another example of the surface treatment apparatus used in the first embodiment of the present invention.
FIG. 3 is a sectional view illustrating one example of a mask used in a second embodiment of the present invention.
FIG. 4 is a plan view illustrating another example of the mask used in the second embodiment of the present invention.
FIG. 5 is a sectional view illustrating a pattern of low alkali concentration regions formed on a glass substrate when surface treatment is conducted in the second embodiment by using the mask illustrated in FIG. 3.
FIG. 6 is a sectional view illustrating a pattern of low alkali concentration regions formed on a glass substrate when surface treatment is conducted in the second embodiment by using the mask illustrated in FIG. 4.
FIG. 7 is a sectional view illustrating a pattern of low alkali concentration regions formed on a glass substrate when surface treatment is conducted in a third embodiment by using the surface treatment apparatus in FIG. 2A and 2B.
FIG. 8 is a sectional view illustrating a formation of precipitate layers on a lower surface of a glass plate in an example 6.

### DETAILED DESCRIPTION

Hereinafter, embodiments of the present invention will be described.

Note that in the present invention, "corona discharge" indicates a continuous discharge which is caused by a generation of non-uniform electric field around a first electrode disposed by being separated from a glass substrate being an object to be treated, the generation of non-uniform electric field being caused by applying a direct-current voltage with required and sufficient magnitude between the first electrode being a positive electrode and a second electrode being a negative electrode. The above-described direct-current voltage with required and sufficient magnitude is referred to as a corona discharge start voltage. Note that this discharge corresponds to a local discharge or a partial discharge in which an ionization of gas that exists between the electrodes is limited locally. Further, this discharge corresponds to an aggregate of a large number of streamers, and occurs continuously during when the above-described voltage is maintained. When the voltage is increased, the corona discharge develops toward the second electrode, and if one streamer approaches or reaches the second electrode, the corona discharge shifts to a spark discharge instantaneously. Basically, in the present invention, it is designed such that a continuous corona discharge which does not shift to the spark discharge is conducted.

Further, in the present invention, it is set that "a positive ion including an alkali ion" means an alkali ion and an alkali earth ion contained in a composition of glass that forms a substrate, and does not include proton being a hydrogen ion. Specifically, when the glass that forms the substrate contains, in its composition, an alkali earth oxide together with an alkali oxide, the alkali earth ion contained in the glass substrate migrates, together with the alkali ion, toward a negative-electrode-side, due to a corona discharge generated between electrodes. Therefore, in the present invention, "at least one kind of the positive ion including the alkali ion" migrated toward the negative-electrode-side in the glass substrate due to the corona discharge indicates one kind or more of ions inevitably including the alkali ion contained in the composition of the glass that forms the substrate, and sometimes including the alkali ion earth ion.

### [Surface treatment method of glass substrate]

### (First embodiment)

In a first embodiment of a surface treatment method of the present invention, a substrate having a pair of main surfaces and being made of glass containing an alkali oxide is first disposed between a first electrode and a second electrode so that one main surface of the glass substrate is separated from the first electrode, and the other main surface is brought into contact with the second electrode. Further, a direct-current voltage is applied by making the first electrode to be a positive electrode and making the second electrode to be a negative electrode to generate a corona discharge between the electrodes, and by the generated corona discharge, at least one kind of a positive ion including an alkali ion is made to migrate in the glass substrate toward the negative-electrode-side on which the glass substrate is brought into contact with the second electrode, in a positive-electrode-side surface layer portion, close to the first electrode, of the glass substrate. By such a migration of the positive ion such as the alkali ion, a concentration of the positive ion such as the alkali ion is decreased in the positive-electrode-side surface layer portion, resulting in that a low alkali concentration region in which the concentration of the alkali ion is lower than that of the other region, is formed in the positive-electrode-side surface layer portion of the glass substrate.

Note that when an alkali earth ion is contained, together with the alkali ion, in the glass that forms the substrate, not only the alkali ion but also the alkali earth ion migrates toward the negative-electrode-side in the positive-electrode-side surface layer portion of the glass substrate, so that in the low alkali concentration region formed in the positive-electrode-side surface layer portion of the glass substrate, not only a concentration of the alkali ion but also a concentration of the alkali earth ion becomes lower than that of the other region. However, a migration length per unit time of the alkali ion becomes larger than that of the alkali earth ion, so that the positive ion to be migrated is set to be typically the alkali ion, and is set to be described regarding the formation of the low alkali concentration region. The description regarding the formation of the low alkali concentration region can be similarly applied to a formation of a low concentration region of the alkali earth ion. The same applies to later-described second embodiment and third embodiment as well.

Further, when the glass substrate contains, in its composition, a plurality of kinds of alkali oxides, since each of a plurality of kinds of alkali ions migrates toward the negative-electrode-side, a region in which concentrations of all of the alkali ions are lower than those of the other region is formed in a surface layer portion of the glass substrate. However, a sodium ion is most easily migrated, and a problem due to an elution or the like of the sodium ion from the surface of the glass substrate is easily caused, so that in the first embodiment, a main alkali ion migrated by the corona discharge is the sodium ion, and a low concentration region of sodium ion is formed. The same applies to the later-described second embodiment and third embodiment as well.

In the surface treatment method of the first embodiment, it is also possible to generate the corona discharge by applying the direct-current voltage by making the first electrode disposed by being separated from the main surface of the glass substrate to be the negative electrode, and making the second electrode disposed to be brought into contact with the main surface of the glass substrate to be the positive electrode. Further, in the surface layer portion, on a side close to the second electrode being the positive electrode, of the glass substrate, at least one kind of the positive ion including the alkali ion can be made to migrate toward a side close to the first electrode being the negative electrode. However, in such a state, a migration speed of the positive ion is slow when compared to the above-described state where the first electrode is set to the positive electrode and the second electrode is set to the negative electrode, resulting in that it takes time for the formation of the low alkali concentration region.
Hereinafter, constituent elements regarding the surface treatment method in which the first electrode is set to the positive electrode and the second electrode is set to the negative electrode, will be described. When the first electrode is set to the negative electrode and the second electrode is set to the positive electrode, it is only required to reverse the polarities of the first electrode and the second electrode, and the other elements can be similarly configured.

### <Glass substrate being object to be treated>

The glass substrate treated in the first embodiment is formed of glass containing an alkali oxide in its chemical composition. Although the composition of glass is not particularly limited as long as it contains at least one kind of an alkali oxide, from a point of view of easiness of surface treatment, the composition of glass is preferably one containing an alkali oxide and an alkali earth oxide in a ratio exceeding 15 mass% in total.

As the glass as described above, there can be cited glass containing, by mass% based on oxide, 50 to 80% of SiO₂, 0.5 to 25% of Al₂O₃, 0 to 10% of B₂O₃, 10 to 16% of Na₂O, 0 to 8% of K₂O, 0 to 16% of Li₂O, 0 to 10% of CaO, 0 to 12% of MgO, and less than 10% of the other components such as SrO, BaO, ZrO₂, ZnO, and SnO₂ in total. Hereinafter, the respective components that form the glass will be described. Note that each description of % represents mass%.

SiO₂ is a component that forms a skeletal structure of the glass. If a content ratio of SiO₂ is less than 50%, there is a possibility that a stability as the glass is lowered, or a weather resistance is lowered. The content ratio of SiO₂ is preferably 60% or more. The content ratio is more preferably 62% or more, and is particularly preferably 63% or more.
If the content ratio of SiO₂ exceeds 80%, there is a possibility that a viscosity of the glass is increased, and a melting property is significantly lowered. The content ratio of SiO₂ is more preferably 76% or less, and is still more preferably 74% or less.

Al₂O₃ is a component of improving a migration speed of ions. If a content ratio of Al₂O₃ is less than 0.5%, there is a possibility that the migration speed of ions is lowered. The content ratio of Al₂O₃ is more preferably 1% or more, still more preferably 2.5% or more, particularly preferably 4% or more, and is the most preferably 6% or more.
If the content ratio of Al₂O₃ exceeds 25%, there is a possibility that the viscosity of the glass is increased, and it becomes difficult to realize a uniform melting. The content ratio of Al₂O₃ is preferably 20% or less. The content ratio is more preferably 16% or less, and is particularly preferably 14% or less.

Although B₂O₃ is not an essential component, it is a component which can be contained for the purpose of improving the melting property at a high temperature or a glass strength. When B₂O₃ is contained, a content ratio thereof is more preferably 0.5% or more, and is still more preferably 1% or more.

Further, the content ratio of B₂O₃ is 10% or less. B₂O₃ becomes easily evaporated when it coexists with an alkali component, so that there is a possibility that it becomes difficult to obtain homogeneous glass. The content ratio of B₂O₃ is more preferably 6% or less, and is still more preferably 1.5% or less. It is preferable that B₂O₃ is not contained for the purpose of particularly improving the homogeneity of the glass.

Na₂O is a component of improving the melting property of the glass, and has a sodium ion being a main ion migrated by the corona discharge. If a content ratio of Na₂O is less than 10%, it is difficult to achieve an effect of migrating the positive ion provided by the corona discharge. The content ratio of Na₂O is more preferably 11% or more, and is particularly preferably 12% or more.
The content ratio of Na₂O is 16% or less. If the content ratio exceeds 16%, a glass transition point Tg, namely, a strain point is lowered, resulting in that there is a possibility that a heat resistance deteriorates, or the weather resistance is lowered. The content ratio of Na₂O is more preferably 15% or less, still more preferably 14% or less, and is particularly preferably 13% or less.

Although K₂O is not an essential component, it is a component of improving the melting property of the glass and a component easily migrated by the corona discharge, so that K₂O may be contained When K₂O is contained, a content ratio thereof is preferably 1% or more, and is more preferably 3% or more.
Further, the content ratio of K₂O is 8% or less. If the content ratio of K₂O exceeds 8%, there is a possibility that the weather resistance is lowered. The content ratio is more preferably 5% or less.

Although Li₂O is not an essential component, similar to K₂O, it is a component of improving the melting property of the glass and a component easily migrated by the corona discharge, so that Li₂O may be contained. When Li₂O is contained, a content ratio thereof is preferably 1% or more, and is more preferably 3% or more. Further, the content of Li₂O is 16% or less. If the content ratio of Li₂O exceeds 16%, there is a possibility that the strain point becomes too low. The content ratio of Li₂O is more preferably 14% or less, and is particularly preferably 12% or less.

The alkali earth oxide is a component of improving the melting property of the glass, and is a component effective for adjusting Tg (glass transition point).

Among the alkali earth oxides, MgO is not an essential component, but, it is a component of improving the strength by increasing a Young's modulus of the glass, and improving a solubility. It is preferable that MgO of 1% or more is contained. A content ratio of MgO is more preferably 3% or more, and is particularly preferably 5% or more. Further, the content ratio of MgO is 12% or less. If the content ratio of MgO exceeds 12%, there is a possibility that the stability of the glass is impaired. The content ratio of MgO is more preferably 10% or less, and is particularly preferably 8% or less.

Although CaO is not an essential component, when CaO is contained, a content ratio thereof is typically 0.05%ormore. Further, the content ratio of CaO is 10% or less. If the content ratio of CaO exceeds 10%, there is a possibility that a migration amount of the alkali ion obtained by the corona discharge is lowered. The content ratio of CaO is more preferably 6% or less, still more preferably 2% or less, and is particularly preferably 0.5% or less.

A sum of a content ratio of the alkali oxide and a content ratio of the alkali earth oxide is set to 15% or more for improving the melting property of the glass and for the stabilized corona discharge realized by the adjustment of Tg. The sum of the content ratio of the alkali oxide and the content ratio of the alkali earth oxide is more preferably 17% or more, and is particularly preferably 20% or more.

The glass forming the substrate which is treated in the first embodiment may contain the other components as long as the object of the present invention is not impaired. In a case where such components are contained, a sum of content ratios of those components is preferably 10% or less, and is more preferably 5% or less. Substantially, it is particularly preferable that the glass is made of the above-described components. Hereinafter, the aforementioned other components will be described in an exemplified manner.

SrO may be contained according to need, but, it increases a specific gravity of the glass when compared to MgO and CaO, so that from a point of view of reduction in weight of material, a content ratio of SrO is preferably less than 1%. The content ratio of SrO is more preferably less than 0.5%, and is particularly preferably less than 0.2%.

Among the alkali earth oxides, BaO has the largest function of increasing the specific gravity of the glass, so that from a point of view of reduction in weight of material, it is preferable that BaO is not contained, or if BaO is contained, a content ratio thereof is preferably less than 1%. The content ratio of BaO is more preferably less than 0.5%, and is particularly preferably less than 0.2%.
When SrO and BaO are contained, a sum of the content ratios thereof is preferably less than 1%. The sum of the content ratios of SrO and BaO is more preferably less than 0.5%, and is particularly preferably less than 0.2%.

Although ZrO₂ is not an essential component, it is a component which may be contained for the purpose of improving a chemical resistance of the glass. When ZrO₂ is contained, a content ratio thereof is more preferably 0.1% or more, still more preferably 0.3% or more, and is particularly preferably 1.5% or more.

Although there is a case where ZnO of up to 2%, for example, may be contained for the purpose of improving the melting property of the glass at a high temperature, the content of ZnO is preferably 1 % or less. In a case where the glass is manufactured by a float process and the like, the content of ZnO is preferably set to 0.5% or less. If the content ratio of ZnO exceeds 0.5%, there is a possibility that ZnO is reduced at a time of float formation, which leads to a product defect. Typically, ZnO is not contained.

When SnO₂ is contained, a content ratio thereof is preferably less than 0.5%. If the content ratio of SnO₂ is 0.5% or more, there is a possibility that the stability of the glass is impaired. The content ratio of SnO₂ is more preferably less than 0.1%, and is particularly preferably less than 0.05%.
Further, the glass containing these respective components may appropriately contain SO₃, a chloride, a fluoride or the like as a clarifying agent at the time of melting.

A shape of the glass substrate formed by such glass is not particularly limited as long as it is a shape having a pair of mutually parallel main surfaces. The shape may be a flat plate shape in which the pair of main surfaces are flat planar surfaces, and it may also be a curved plate shape in which the pair of main surfaces are curved surfaces. Hereinafter, a glass substrate having the flat plate shape or the curved plate shape as above is referred to as the glass plate, and the surface treatment of the glass plate will be described. The same applies to the later-described second embodiment and third embodiment as well.

### <First electrode and second electrode>

In the first embodiment, a first electrode and a second electrode connected to a direct-current power supply, for example, are disposed by facing each other with a predetermined interval provided therebetween, and the above-described glass plate is disposed between these electrodes in the following manner. Specifically, the glass plate is disposed so that one main surface of the glass plate which is, for example, an upper surface of the glass plate is separated from the first electrode by a predetermined distance, and the other main surface of the glass plate which is, for example, a lower surface of the glass plate is brought into contact with the second electrode. Further, a direct-current voltage is applied by making the first electrode to be a positive electrode and making the second electrode to be a negative electrode, to thereby generate a corona discharge between the electrodes.

The distance between the upper surface of the glass plate and the first electrode being the positive electrode is preferably set to be larger than 0 mm and equal to or less than 30 mm, since a discharge current becomes smaller and the corona discharge becomes weaker as the aforementioned distance is increased, although being different depending on a shape of the first electrode, the applied voltage and the like. Further, since the discharge current becomes parabolically larger and the corona discharge becomes stronger as the distance is reduced, the distance is more preferably larger than 0 mm and equal to or less than 10 mm.

Here, the first electrode being the positive electrode preferably has an electrode area smaller than that of the second electrode being the negative electrode. Note that the "electrode area" regarding the first electrode being the positive electrode indicates a projected area with respect to the main surface of the glass plate being the object to be treated, and the "electrode area" regarding the second electrode being the negative electrode indicates an area of the second electrode at which the electrode is brought into contact with the main surface of the glass plate. When the first electrode is formed of an aggregate of a plurality of pieces of wire-shaped or needle-shaped electrodes as will be described later, the "electrode area" indicates a sum of the "electrode areas" of the respective wire-shaped electrodes or the respective needle-shaped electrodes. The description regarding these "electrode areas" are similarly applied to the later-described second embodiment and third embodiment as well.

As the first electrode being the positive electrode, a wire-shaped electrode, or a needle-shaped electrode having a sharp portion at a tip thereof, can be used. Regarding these wire-shaped electrode and needle-shaped electrode, one piece of electrode can be used by itself, or it is also possible to use an aggregate of a plurality of pieces of electrodes which are disposed by providing a predetermined interval therebetween, namely, disposed at a predetermined pitch, as the first electrode. As described above, by setting the plurality of pieces of wire-shaped electrodes or needle-shaped electrodes disposed with the predetermined interval provided therebetween to the first electrode, it becomes possible to perform uniform treatment on the surface of the glass plate.

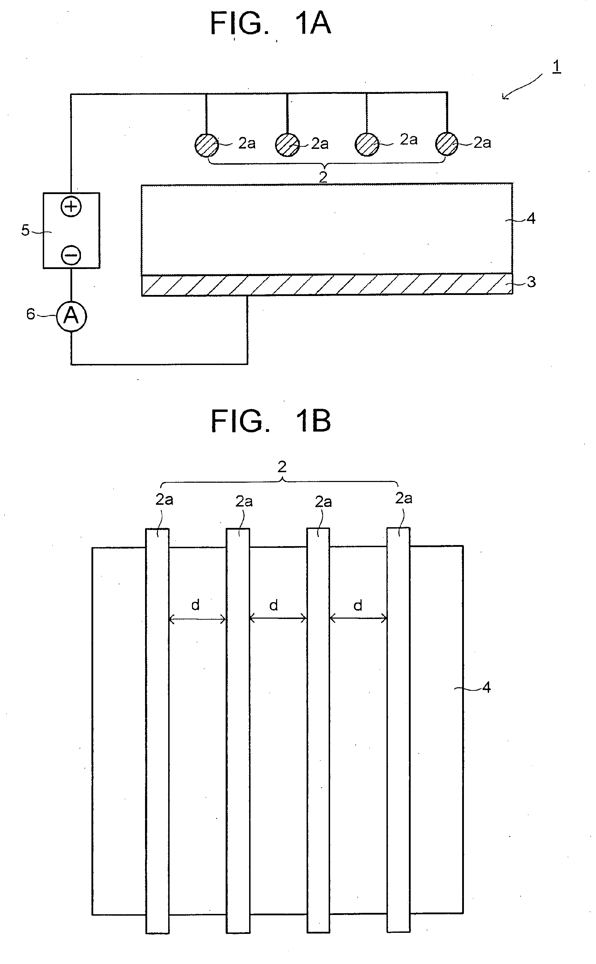

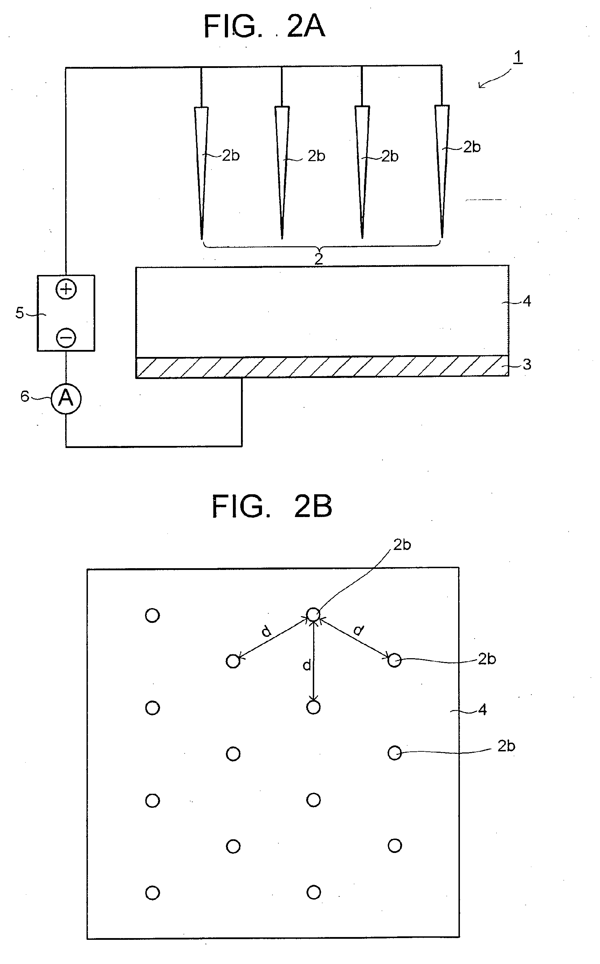

An example of apparatus used for the surface treatment method of the first embodiment will be illustrated in FIG. 1A, FIG. 1B, FIG. 2A and FIG. 2B. FIG. 1A and FIG. 2A are front views schematically illustrating a configuration of a surface treatment apparatus 1, and FIG. 1B and FIG. 2B are top views for explaining a disposition of a first electrode with respect to a glass plate. In the surface treatment apparatus 1 illustrated in FIG. 1A and FIG. 1B, wire-shaped electrodes 2a are provided as a first electrode 2 being a positive electrode. Further, in the surface treatment apparatus 1 illustrated in FIG. 2A and FIG. 2B, needle-shaped electrodes 2b are provided as the first electrode 2. Note that in these drawings, a reference numeral 3 denotes a second electrode being a negative electrode, and a reference numeral 4 denotes a glass plate being an object to be treated. Further, a reference numeral 5 denotes a direct-current power supply, and a reference numeral 6 denotes an ammeter for monitoring a current that flows through a circuit.

In the surface treatment apparatus 1 illustrated in FIG. 1A and FIG. 1B, the wire-shaped electrode 2a being the first electrode 2 being the positive electrode is preferably thin from a point of view of easiness of generation of corona discharge, and it is preferable that, in terms of strength and handleability, a diameter of the wire-shaped electrode 2a is preferably 0.03 mm to 0.1 mm. Further, the wire-shaped electrode 2a is preferably disposed in parallel to an upper surface of the glass plate 4. When a plurality of pieces of wire-shaped electrodes 2a are used as the first electrode 2, the respective wire-shaped electrodes 2a are preferably disposed on a plane parallel to the upper surface of the glass plate 4, and disposed in parallel to each other with an interval d, which is larger than 0 mm and is about the same as a distance between the glass plate 4 and the wire-shaped electrode 2a, provided therebetween as illustrated in FIG. 1B, in order to perform uniform treatment on the surface of the glass plate. As will be described later, when the glass plate 4 is moved in parallel with respect to the wire-shaped electrodes 2a, since the glass plate 4 makes the parallel movement, a non-uniformity of treatment is reduced, resulting in that the interval between the respective wire-shaped electrodes 2a can be further increased.

Further, when one piece of wire-shaped electrode 2a is disposed by itself as the first electrode 2, in order to perform uniform treatment on the surface of the glass plate 4 and to uniformize a distribution of concentration of alkali ions in a low alkali concentration region formed in a positive-electrode-side surface layer portion, it is preferable to make the second electrode 3 integrally formed with the glass plate 4 to perform relative movement with respect to the wire-shaped electrode 2a being the first electrode 2. Concretely, it is preferable that the second electrode 3 being the negative electrode in a state of having the glass plate 4 placed thereon is made to perform movement in a direction orthogonal to an arrangement direction of the wire-shaped electrode 2a. Although this movement is more preferably a linear movement or a linear reciprocating movement, it may also be a rotary movement, or a swinging movement.

Further, it is preferable to provide a cylindrical or square-shaped casing, similar to a charger, utilizing a corona discharge, called as a corotron or a scorotron which is widely used. It is also possible to provide a grid electrode. By operations of the above-described casing and grid electrode, a flow of ions in the corona discharge can be controlled, and it is possible to improve treatment uniformity and treatment efficiency with respect to the glass plate.

In the surface treatment apparatus 1 illustrated in FIG. 2A and FIG. 2B, a diameter of a root portion of a needle-shaped electrode 2b being the first electrode 2 being the positive electrode is preferably 0.1mm to 2 mm, and the needle-shaped electrode 2b is preferably disposed in a perpendicular manner with respect to the upper surface of the glass plate 4 by directing a sharp portion at a tip of the needle-shaped electrode 2b to the upper surface of the glass plate 4. When a plurality of pieces of needle-shaped electrodes 2b are used as the first electrode 2, it is preferable to dispose the respective needle-shaped electrodes 2b so that the electrodes become parallel to each other and perpendicular to the upper surface of the glass plate 4, and respective tip portions of the electrodes have the same distance from the upper surface of the glass plate 4. Further, regarding arrangement positions of the respective needle-shaped electrodes 2b, it is preferable to uniformly dispose the electrodes in a zigzag form, a grid form or the like, with an interval d, which is larger than 0 mm and is about the same as a distance between the glass plate 4 and the needle-shaped electrode 2b, provided therebetween as illustrated in FIG. 2B, in order to perform uniform treatment on the surface of the glass plate 4. When the glass plate 4 makes movement in parallel with respect to the needle-shaped electrodes 2b, since a non-uniformity of treatment is reduced by the movement of the glass plate 4, the interval between the respective needle-shaped electrodes 2b can be further increased

Since the sharper a tip angle being an angle of tip portion of the needle-shaped electrode 2b is, the larger an electric field intensity right below the tip portion becomes, by adjusting the tip angle of the needle-shaped electrode 2b, it is possible to adjust the electric field intensity in the vicinity of the first electrode 2. The tip angle of the needle-shaped electrode 2b is preferably 1 degree to 15 degrees, and is more preferably 1 degree to 9 degrees. In the wire-shaped electrode 2a and the needle-shaped electrode 2b, if a corrosion-resistant conductive film made of gold, platinum, or the other noble metal is provided to a surface of the electrode, a uniformity of the electric field intensity becomes good, and further, a durability as the electrode is improved.

In the surface treatment apparatus 1 illustrated in FIG. 1A, FIG. 1B, FIG. 2A and FIG. 2B, the second electrode 3 being the negative electrode is preferably one having a shape, in accordance with that of a lower surface of the glass plate 4 being the object to be treated, such as a flat plate shape and a curved plate shape. Further, the second electrode 3 may also be one which is uniformly brought into contact with the glass plate 4 within a plane, such as one with a mesh form having hole portions.
By disposing the second electrode 3 as above so that the electrode is brought into contact with the lower surface of the glass plate 4, the conductivity with respect to the glass plate 4 is improved, resulting in that the applied voltage can be increased. In the second electrode 3, by providing a conductive film such as ITO on a surface of the electrode with which the glass plate 4 is brought into contact, the conductivity can be further improved.

Next, a temperature of the glass plate, a treatment atmosphere and the like being conditions of the surface treatment in the first embodiment will be described.

### <Temperature of glass plate>

The temperature of the glass plate is preferably a room temperature to 400°C. A glass transition point Tg of the glass plate is about 550°C, so that the temperature of the glass plate is preferably a room temperature to a temperature of (Tg -150°C).

By setting the temperature of the glass plate to the temperature of 400°C or less, it is possible to form the low alkali concentration region with a sufficient thickness in the surface layer portion of the glass plate without causing a deformation of the glass plate and a deterioration of treating members. Further, in the aforementioned temperature range, since the temperature is lower than Tg, and a solid state with sufficiently large viscosity is exhibited, there is no chance that the alkali ion in the glass plate migrates too much, and a direction of migration of the alkali ion is limited to a direction toward the negative-electrode-side being a direction of electric field, which provides a high efficiency of the surface treatment with the use of the corona discharge. The temperature of the glass plate is more preferably 100°C to 300°C. However, when Tg is 400°C or less, the temperature of the glass plate is more preferably a temperature lower than the above-described temperature.

### <Applied voltage>

The direct-current voltage applied between the first electrode and the second electrode is a voltage generating the corona discharge between these electrodes by making the first electrode to be the positive electrode and making the second electrode to be the negative electrode, and more concretely, the direct-current voltage is a voltage generating the corona discharge from the first electrode being the positive electrode. Although this applied voltage is changed depending on the shape of the first electrode and the temperature of the glass plate being the object to be treated, the voltage is set to fall within a range of 3 kV to 12 kV. If the applied voltage is less than 3 kV, the corona discharge is difficult to be generated. If the applied voltage exceeds 12 kV, an arc discharge is easily generated, and it is difficult to continue the corona discharge.

In the first embodiment, the current that flows through the glass plate being the object to be treated due to the application of direct-current voltage as above includes both of a current caused by a transfer of electron and a current caused by a migration of the positive ion including the alkali ion. It is preferable that the current flowing through the glass plate during a surface treatment process falls within a range of 0.01 mA to 0.5 mA, and a quantity of electricity per unit area falls within a range of 10 mC/cm² to 500 mC/cm².

### <Treatment atmosphere>

An atmosphere between the first electrode being the positive electrode and the second electrode being the negative electrode, at which the glass plate being the object to be treated is disposed, can be maintained in the atmosphere mainly formed of air or nitrogen. Here, the "atmosphere mainly formed of air or nitrogen" refers to a state of gas in which a content ratio of air or nitrogen exceeds 50 volume% of the entire atmosphere gas.

As described above, the second electrode being the negative electrode is disposed so as to be brought into contact with the main surface of the glass plate which is, for example, the lower surface of the glass plate, and thus the conductivity between the second electrode and the glass plate is improved, so that there is no need to create the atmosphere formed of plasma formation gas such as helium and argon. Specifically, it is possible to perform treatment on the surface of the glass plate by generating the corona discharge around the first electrode in the atmosphere mainly formed of air or nitrogen.

Further, the atmosphere between the first electrode being the positive electrode and the second electrode being the negative electrode can be maintained in the atmosphere containing gas which generates a hydrogen ion, namely, proton. As the gas which generates the hydrogen ion, hydrogen gas can be exemplified. Other than the hydrogen gas, air or nitrogen can be contained. A content ratio of the hydrogen gas can be set to 1 to 100 volume% of the entire atmosphere gas, for example, and is preferably 2 to 10 volume%. When the content ratio of gas which generates the hydrogen ion such as, for example, hydrogen gas is less than 1 volume%, an effect of adding the gas is difficult to be obtained. By performing the treatment in the atmosphere containing gas which generates the hydrogen ion, proton can be injected into the low alkali concentration region formed in the surface layer portion of the glass plate. Further, the injected proton is bonded by entering a portion after the alkali ion in the glass composition is migrated, so that the migration speed of the alkali ion toward the negative-electrode-side can be increased, and in addition to that, it is possible to prevent a return of the migrated alkali ion.

As described above, in the surface treatment method of the first embodiment, there is performed the treatment in which the wire-shaped or needle-shaped first electrode being the positive electrode is disposed by being separated from the upper surface, for example, of the glass plate being the object to be treated, the second electrode being the negative electrode is disposed by being brought into contact with the lower surface, for example, of the glass plate, the direct-current voltage is applied between the electrodes so that the corona discharge is generated from the first electrode, and by the electric field generated by the application of the voltage, the positive ion including the alkali ion in the glass is made to migrate. Further, since the second electrode is disposed by being brought into contact with the lower surface of the glass plate, the conductivity from the glass plate to the second electrode is secured, a high voltage can be applied between the first electrode being the positive electrode and the second electrode being the negative electrode, and the treatment is performed by maintaining the temperature of the glass plate to the temperature of 400°C or less at which there is no possibility of deformation and deterioration of the glass and the treating members, resulting in that the low alkali concentration region with a sufficient thickness can be formed in the surface layer portion of the glass plate.

### (Second embodiment)

In a second embodiment of a surface treatment method of the present invention, a point different from that of the first embodiment will be described.

In the second embodiment, a mask made of an insulating material and having through hole portions or ultrathin portions with a predetermined pattern, is first arranged on one main surface of a glass plate made of glass containing an alkali oxide and having a pair of main surfaces. Next, the glass plate on which the mask is arranged is disposed between a first electrode and a second electrode to make a surface of the mask to be separated from the first electrode, and to make the other main surface of the glass plate to be brought into contact with the second electrode. Subsequently, a direct-current voltage is applied by making the first electrode to be a positive electrode and making the second electrode to be a negative electrode to generate a corona discharge between the electrodes, and by the generated corona discharge, at least one kind of a positive ion including an alkali ion is made to migrate toward the negative-electrode-side on which the glass plate is brought into contact with the second electrode, in regions, corresponding to or facing the through hole portions or the ultrathin portions of the mask, in a positive-electrode-side surface layer portion of the glass plate close to the first electrode.

In the manner as described above, the concentration of the positive ion such as the alkali ion is reduced when compared to the concentration before performing the treatment in the region corresponding to the through hole portion or the ultrathin portion of the mask, to thereby form the low alkali concentration region in which the concentration is lower than that of the other region. Further, in a region which is brought into contact with a main body portion except for the through hole portion or the ultrathin portion of the mask, there is no migration of the alkali ion and the like toward the negative-electrode-side, or an amount and a migration length of ion to be migrated are extremely small, so that the above-described low alkali concentration region is not formed, or the region whose depth is extremely shallow from the surface, namely, whose thickness is extremely thin, is formed. Therefore, the low alkali concentration regions can be formed in the positive-electrode-side surface layer portion of the glass plate, in a pattern corresponding to the pattern of the through hole portions or the ultrathin portions of the mask

### <Glass plate being object to be treated>

The glass plate treated in the second embodiment is similar to the glass plate treated in the first embodiment.

### <Mask>

The mask arranged on the main surface of the glass plate is made of an insulating material and having through hole portions or ultrathin portions with a predetermined pattern. The pattern of the through hole portions or the ultrathin portions formed on the mask is not limited. Specifically, a planar shape, an arrangement and the like of the through hole portions and the ultrathin portions are not limited. Note that the through hole portion of the mask indicates a hole portion or the like formed by penetrating through a mask main body, and the ultrathin portion indicates a portion, which is not a penetrated hole but has a thickness which is extremely thinner than that of the other portion, the thickness being one-tenth or less of that of the other portion, for example.

The material that forms the mask is the insulating material from a point of view of shielding a discharge, generated by the corona discharge, from the first electrode being the positive electrode toward the second electrode being the negative electrode.

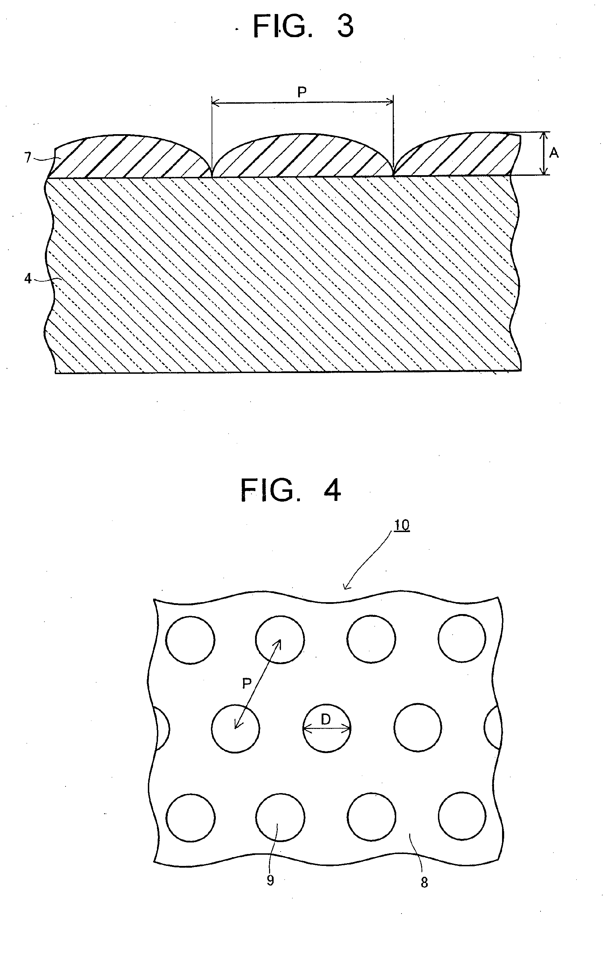

As the mask used in the embodiment of the present invention, there can be cited a mask 7 made of an azobenzene resin and formed on the main surface of the glass plate 4 in a L/S (Line and Space) pattern form at a predetermined pitch P, as illustrated in FIG. 3, for example. The mask 7 can be obtained by irradiating a laser beam or the like in a predetermined pattern on the azobenzene resin layer formed on the main surface of the glass plate 4 to form a concave and convex pattern with a predetermined pitch P on the layer surface.

The formation of concave and convex pattern on the surface of the azobenzene resin layer is realized by the following mechanism Specifically, the azobenzene resin is a resin having an azobenzene skeleton, and when a pattern of light of laser beam or the like is irradiated on the layer made of the azobenzene resin, a polymer chain is moved from a portion with high-intensity light to a portion with low-intensity light in response to the light intensity at the surface portion of the layer, resulting in that the concave and convex pattern is formed on the surface. Note that in the concave and convex pattern formed on the surface of the azobenzene resin layer, the concave portion becomes the ultrathin portion of the mask 7, and it is possible to obtain the mask 7 in the L/S pattern form in which the ultrathin portions are arranged at the predetermined pitch P.

A film thickness A of the mask 7 corresponding to a level difference of the concave and convex formed on the surface of the azobenzene resin layer can be set to fall within a range of 0.1 µm to 5 µm. Further, the pitch P of the ultrathin portions corresponding to a pitch of the concave portions can be set to fall within a range of 0.3 µm to 10 µm.
As described above, by using the azobenzene resin as the mask material, it is possible to obtain the mask 7 having the aforementioned film thickness A and fine pattern with the pitch P. Further, by using such a mask 7, it is possible to form the low alkali concentration regions in the positive-electrode-side surface layer portion of the glass plate 4 in a fine pattern.

Further, as the insulating material that forms the mask, it is also possible to use, other than the azobenzene resin, a polymeric material such as an acrylic resin, a urethane resin, and a polyimide resin. For example, the mask made of the acrylic resin can be obtained by irradiating an ultraviolet ray on a layer of ultraviolet-curing acrylic resin of, for example, OP-3010P, which is a trade name, manufactured by DENKI KAGAKU KOGYO KABUSHIKI KAISHA, formed on the main surface of the glass plate, in a predetermined pattern to form a concave and convex pattern at a predetermined pitch P on the layer surface. Further, the mask can also be similarly formed by using a photoresist of, for example, OPR-800, which is a trade name, being a resist for g ray manufactured by TOKYO OHKA KOGYO., LTD.. In each of the masks formed by these polymeric materials, the film thickness A and the pitch P are preferably set to fall within ranges similar to those of the mask made of the azobenzene resin described above. Further, by using each of the masks made of these polymeric materials, it is possible to form the low alkali concentration regions in the positive-electrode-side surface layer portion of the glass plate 4 in a fine pattern.

Further, as illustrated in FIG. 4, it is possible to use a mask 10 having a bored pattern made by forming hole portions 9 such as circular holes on a resin film 8 in a predetermined pattern As an insulating material forming the resin film 8, a fluorocarbon resin is preferable from a point of view of heat resistance and corrosion resistance, but, the material is not limited to this. From a point of a function as the mask 10, a thickness of the resin film 8 is preferably 0.1 mm to 1 mm. Further, a diameter D and an arrangement pattern of the hole portion 9 can be adjusted in accordance with a diameter and an arrangement of a pattern of the low alkali concentration region to be formed, and are not particularly limited. From a point of easiness of the formation of the pattern of the low alkali concentration regions, the diameter D of the hole portion 9 is preferably within a range of 0.1 mm to 30 mm. Further, as the arrangement pattern of the hole portions 9 being the bored pattern, there can be cited an arrangement pattern of zigzag form with a predetermined pitch P in which the respective hole portions 9 are arranged so as to occupy positions of a center and vertices of a hexagon, for example.

When the mask 10 made of the resin film 8 as above is used, only in a region, corresponding to the hole portion 9, in the positive-electrode-side surface layer portion of the glass plate, the low alkali concentration region can be formed by making the alkali ion and the like migrate toward the negative-electrode-side. Therefore, it is possible to form the low alkali concentration regions in the pattern corresponding to the hole portions 9 of the mask 10.

### <First electrode and second electrode>

In the second embodiment, the first electrode and the second electrode connected to a direct-current power supply, for example, are disposed by facing each other with a predetermined interval provided therebetween, and the glass plate on which the aforementioned mask is arranged is disposed between these electrodes in the following manner. Specifically, the glass plate is disposed so that one main surface of the glass plate which is, for example, an upper surface of the glass plate is separated from the first electrode, the mask arranged on the upper surface faces the first electrode with a predetermined interval provided therebetween, and the other main surface of the glass plate which is, for example, a lower surface of the glass plate is brought into contact with the second electrode. Further, a direct-current voltage is applied by making the first electrode to be a positive electrode and making the second electrode to be a negative electrode, to thereby generate a corona discharge between the electrodes.

A distance between the upper surface being the surface of the mask and the first electrode being the positive electrode is preferably set to be larger than 0 mm and equal to or less than 30 mm, since a discharge current becomes smaller and the corona discharge becomes weaker as the aforementioned distance is increased, although being different depending on a shape of the first electrode, the applied voltage and the like. Further, since the discharge current becomes parabolically larger and the corona discharge becomes stronger as the distance is reduced, the distance is more preferably larger than 0 mm and equal to or less than 10 mm.

Further, also in the second embodiment, the first electrode and the second electrode similar to those of the first embodiment may be employed, and the disposition of the electrodes may also be similar to that of the first embodiment Further, the method of uniformly performing the treatment on the entire main surface of the glass plate may also be similar to that of the first embodiment Further, the temperature of the glass plate, the treatment atmosphere and the like being the conditions of the surface treatment in the second embodiment may also be similar to those of the first embodiment

In the surface treatment method of the second embodiment, the mask made of the insulating material and having the through hole portions or the ultrathin portions with the predetermined pattern is arranged on, for example, the upper surface of the glass plate being the object to be treated, the first electrode being the wire-shaped electrode or the like being the positive electrode is disposed by being separated from the mask, and the second electrode being the negative electrode is disposed by being brought into contact with, for example, the lower surface of the glass plate. Further, by applying the direct-current voltage between the electrodes so that the corona discharge is generated from the first electrode, the positive ions including the alkali ions in the glass are made to migrate to the negative-electrode-side, by the electric field generated by the application of the voltage, in the regions corresponding to the through hole portions or the ultrathin portions of the mask, to form the low alkali concentration regions, resulting in that the low alkali concentration regions are formed in the pattern corresponding to the pattern of the through hole portions or the ultrathin portions of the mask

Further, since the second electrode is disposed by being brought into contact with the lower surface of the glass plate, the conductivity from the glass plate to the second electrode is secured, and since a high voltage can be applied between the first electrode being the positive electrode and the second electrode being the negative electrode, the treatment can be performed by maintaining the temperature of the glass plate to the temperature of 400°C or less at which there is no possibility of deformation and deterioration of the glass and the treating members, resulting in that the low alkali concentration regions with a sufficient thickness can be formed in the surface layer portion of the glass plate in the predetermined pattern.

### (Third embodiment)

In a third embodiment of a surface treatment method of the present invention, a plurality of pieces of needle-shaped electrodes disposed at a predetermined arrangement in the same direction with a predetermined interval provided therebetween, namely, in parallel to each other, are employed as a first electrode. A plate having a pair of main surfaces and being made of glass containing an alkali oxide is disposed between the first electrode as above and a second electrode to make one main surface of the glass plate to be vertical with respect to the respective needle-shaped electrodes forming the first electrode and make the one main surface to be separated from tip portions of the needle-shaped electrodes, and to make the other main surface to be brought into contact with the second electrode. Further, a direct-current voltage is applied by making the first electrode to be a positive electrode and making the second electrode to be a negative electrode to generate a corona discharge between the electrodes, and by the generated corona discharge, at least one kind of a positive ion including an alkali ion is made to migrate toward the negative-electrode-side on which the glass plate is brought into contact with the second electrode, in the region, facing the tip portion of each of the needle-shaped electrodes, in the positive-electrode-side surface layer portion, close to the first electrode being the positive electrode, of the glass plate. Note that the region facing the tip portion of the needle-shaped electrode indicates a region which is the closest to the tip portion, such as a region right below the tip portion of the needle-shaped electrode, for example. Hereinafter, this region is sometimes referred to as a region facing and right below the tip portion.

As above, the concentration of the positive ion such as the alkali ion is reduced when compared to the concentration before performing the treatment in the region facing and right below the tip portion of each of the needle-shaped electrodes, resulting in that the low alkali concentration region in which the concentration is lower than that of the other region is formed in this region. Further, even in the positive-electrode-side surface layer portion of the glass plate, in a region which does not face and which is not right below the tip portion of each of the needle-shaped electrodes, there is no migration of the alkali ion and the like toward the negative-electrode-side, or an amount and a migration length of ion to be migrated are extremely small, and thus the above-described low alkali concentration region is not formed almost at all, so that the above-described low alkali concentration regions in a pattern form corresponding to the arrangement of the needle-shaped electrodes are formed in the positive-electrode-side surface layer potion of the glass plate.

### <Glass plate being object to be treated>

The glass plate treated in the third embodiment is similar to the glass plate treated in the first embodiment and the second embodiment

### <First electrode and second electrode>

In the third embodiment, the first electrode being the aggregate of the plurality of pieces of needle-shaped electrodes disposed in parallel to each other and in the same direction at the predetermined arrangement with the predetermined interval provided therebetween, and the second electrode with a flat plate shape, for example, are disposed by facing each other with the predetermined interval provided therebetween, and the above-described glass plate is disposed between these electrodes in the following manner. Specifically, the glass plate is disposed so that one main surface of the glass plate which is, for example, the upper surface of the glass plate faces the tip portions of the needle-shaped electrodes being the first electrode with the predetermined interval provided therebetween, and the other main surface of the glass plate which is, for example, the lower surface of the glass plate is brought into contact with the second electrode. Further, the direct-current voltage is applied by making the first electrode to be the positive electrode and making the second electrode to be the negative electrode, to thereby generate the corona discharge between the electrodes.

The apparatus used for the surface treatment method of the third embodiment can be configured in a manner similar to that of the apparatus illustrated in FIG. 2A and FIG. 2B used in the first embodiment In the surface treatment apparatus 1 illustrated in FIG. 2A and FIG. 2B, if a corrosion-resistant conductive film made of gold, platinum, or the other noble metal is provided to a surface of each of the needle-shaped electrodes 2b configuring the first electrode 2 being the positive electrode, a uniformity of the electric field intensity becomes good, and further, a durability as the electrode is improved. A diameter of a root portion of the needle-shaped electrode 2b is preferably 0.1 mm to 2 mm. A tip angle being an angle of the tip portion of the needle-shaped electrode 2b is preferably 5degrees to 25 degrees, and is more preferably 7 degrees to 15 degrees. By setting the diameter and the tip angle of the needle-shaped electrode 2b to fall within the above-described ranges, it is possible to create a sufficiently large electric field intensity in the vicinity of the tip portion of the needle-shaped electrode 2b. If the tip angle of the needle-shaped electrode 2b is too large, it becomes difficult to generate the corona discharge. On the contrary, if the tip angle of the needle-shaped electrode 2b is too small, the arc discharge is easily generated even at a low voltage, and it is not possible to maintain a stabilized corona discharge state.

In the surface treatment apparatus 1 used in the third embodiment, the plurality of pieces of needle-shaped electrodes 2b as above are disposed in a manner that they are parallel to each other, the tip portions are respectively faced toward the upper surface of the glass plate 4 and are vertical with respect to the upper surface of the glass plate 4, and the distances between the tip portions and the upper surface of the glass plate 4 become equal. The arrangement of the plurality of pieces of needle-shaped electrodes 2b is not particularly limited, and an arrangement of zigzag form in which the electrodes occupy positions of a center and vertices of a hexagon as illustrated in FIG. 2B, for example, an arrangement of grid form or the like can be exemplified. Note that the arrangement of the plurality of pieces of needle-shaped electrodes 2b is not necessarily the arrangement with equal intervals.

In order to make the alkali ion and the like migrate toward the negative-electrode-side only in the region facing and right below the tip portion of each of the needle-shaped electrodes 2b, in the positive-electrode-side surface layer portion of the glass plate 4, to form the pattern of the low alkali concentration regions, an arrangement interval d between the respective needle-shaped electrodes 2b is preferably 1 mm or more, and the distance between the tip portion of each of the needle-shaped electrodes 2b and the glass plate 4 is preferably 0.1 mm to 15 mm. More concretely, when the arrangement interval d between the respective needle-shaped electrodes 2b is about 10 mm, the distance between the tip portion of the needle-shaped electrode 2b and the glass plate 4 can be set to fall within a range of 1 mm to 15 mm. If the above-described distance exceeds 10 mm, a period of time taken for the surface treatment becomes long, so that from a point of view of reduction in the treatment time, the distance is preferably 1 mm to 10 mm. Note that as described above, each of the arrangement intervals d between the respective needle-shaped electrodes 2b is not necessarily the same as a whole.

In the surface treatment apparatus 1 used in the third embodiment, the second electrode 3 being the negative electrode is preferably one having a shape, in accordance with that of the lower surface of the glass plate 4 being the object to be treated, such as a flat plate shape and a curved plate shape. Further, the second electrode 3 may also be one which is uniformly brought into contact with the glass plate 4 within a plane, such as one with a mesh form having hole portions.
By disposing the second electrode 3 as above so that the electrode is brought into contact with the lower surface of the glass plate 4, the conductivity with respect to the glass plate 4 is improved, resulting in that the applied voltage can be increased. By providing a conductive film such as ITO on the surface of the glass plate 4 which is brought into contact with the second electrode 3, the conductivity can be further improved.
As the second electrode 3, an electrode made of a solid conductive material can be of course employed, and in addition to that, an electrode made of a molten metal may also be employed. An In-Sn alloy is particularly preferable as the molten metal, because of its low melting point

Next, a temperature of the glass plate, a treatment atmosphere and the like being conditions of the surface treatment in the third embodiment will be described.

### <Conditions of surface treatment>

The temperature of the glass plate may be similar to that of the first embodiment and the second embodiment. The direct-current voltage applied between the first electrode and the second electrode is set to fall within a range of 3 kV to 12 kV, although the voltage is changed depending on the tip angle of the needle-shaped electrode and the temperature of the glass plate being the object to be treated. If the applied voltage is less than 3 kV, the corona discharge is difficult to be generated. If the applied voltage exceeds 12 kV, the arc discharge is easily generated, and it is difficult to continue the corona discharge.

In the third embodiment, the current that flows through the glass plate being the object to be treated due to the application of direct-current voltage as above includes both of a current caused by a transfer of electron and a current caused by a migration of the positive ion including the alkali ion. In the glass containing the alkali oxide and the alkali earth oxide whose ratio exceeds 15 mass% in total, the current per unit area flowing through the glass plate during a surface treatment process under conditions where an air atmosphere is provided and a distance between the tip of the needle-shaped electrode and the glass plate is 5 mm, preferably falls within a range of 1 µA/cm² to 100 µA/cm², although depending on the glass composition, the treatment atmosphere, and the distance between the electrodes. When the treatment time is 120 minutes, a quantity of electricity per unit area becomes about 7 mC/cm² to 720 mC/cm².

An atmosphere between the first electrode being the positive electrode and the second electrode being the negative electrode, at which the glass plate being the object to be treated is disposed, is maintained in the atmosphere mainly formed of air, nitrogen, or rare gas such as argon. Here, the "atmosphere mainly formed of air, nitrogen, or rare gas" refers to a state of gas in which a content ratio of air, nitrogen, or rare gas exceeds 50 volume% of the entire atmosphere gas. A type of gas other than the gas (air, nitrogen, or rare gas) whose content ratio exceeds 50 volume% of the entire atmosphere gas, is not particularly limited Specifically, the rare gas such as argon may be contained in an atmosphere as main gas, or it may also be contained, as gas other than the main gas, in an atmosphere mainly formed of air or nitrogen.
As described above, the second electrode being the negative electrode is disposed so as to be brought into contact with the main surface of the glass plate, and thus the conductivity between the second electrode and the glass plate is increased. It is possible to perform treatment on the surface of the glass plate by generating the corona discharge around the first electrode in the atmosphere mainly formed of air, nitrogen, or rare gas.

Further, the atmosphere between the first electrode being the positive electrode and the second electrode being the negative electrode can be maintained in the atmosphere containing gas which generates a hydrogen ion, similar to the first embodiment and the second embodiment.

As described above, in the surface treatment method of the third embodiment, the aggregate of the plurality of pieces of needle-shaped electrodes disposed in parallel to each other with the predetermined interval provided therebetween and at the predetermined arrangement is used as the first electrode being the positive electrode, and the glass plate being the object to be treated is disposed between the first electrode as above and the second electrode being the negative electrode in the manner that one main surface of the glass plate is separated from the first electrode, and the other main surface of the glass plate is brought into contact with the second electrode. Further, the direct-current voltage is applied between the electrodes so that the corona discharge is generated from the first electrode, and by the electric field generated by the application of the voltage, the positive ion including the alkali ion in the glass is made to migrate toward the negative-electrode-side in the region of the glass plate facing and right below the tip portion of each of the needle-shaped electrodes to form the low alkali concentration region, so that the low alkali concentration regions are formed in the pattern same as that corresponding to the arrangement of the needle-shaped electrodes.

### [Glass plate obtained by surface treatment]

### (Glass plate obtained by first embodiment)

By the surface treatment of the first embodiment, at least one kind of the positive ion including the alkali ion migrates toward the negative-electrode-side on which the glass plate is brought into contact with the second electrode, in the positive-electrode-side surface layer portion, close to the first electrode, of the glass plate being the object to be treated, resulting in that the low alkali concentration region in which the concentration of at least one kind of the alkali ion is lower than that of the other region is formed.

Normally, the low alkali concentration region can be set to a region in which the concentration of sodium ion is lower than that of the other region, as described above, and concretely, a region in which the concentration of sodium ion is, for example, 500 ppm or less on molar basis can be set to the low alkali concentration region. Here, the concentration of sodium ion is set to a value measured by ToF-SIMS (time-of-flight secondary ion mass spectrometry), for example. The range of concentration of the sodium ion and the method of measuring the concentration as above can be similarly applied to the low alkali concentration regions formed in a pattern form

In the glass plate obtained by the first embodiment, the low alkali concentration region as above has a thickness greater than 0 µm and equal to or less than 10 µm. Specifically, a region having a depth of up to 10 µm from one main surface of the glass plate corresponds to the low alkali concentration region in which the concentration of sodium ion is 500 ppm or less on molar basis.

Further, in the glass plate after being subjected to the surface treatment as above, the aforementioned low alkali concentration region has a proton concentration higher than that of the other region. Specifically, by making the atmosphere of the surface treatment to be the atmosphere mainly formed of air or nitrogen and containing proton supply gas such as hydrogen gas as described above, it is possible to inject proton into the low alkali concentration region to increase the proton concentration. The proton concentration can be increased to, for example, 40000 ppm or more on molar basis, although depending on the amount of alkali ion. Further, in such a low alkali concentration region in which the proton concentration is increased, there is no return of the migrated alkali ion, so that a low alkali ion concentration is maintained.

### (Glass plate obtained by second embodiment)

By the surface treatment of the second embodiment, at least one kind of the positive ion including the alkali ion migrates toward the negative-electrode-side on which the glass plate is brought into contact with the second electrode, in the region, corresponding to the through hole portion or the ultrathin portion of the mask, in the positive-electrode-side surface layer portion, close to the first electrode, of the glass plate being the object to be treated, resulting in that the low alkali concentration region in which the concentration of at least one kind of the alkali ion is reduced when compared to that before performing the treatment, and thus the concentration becomes lower than that of the other region, is formed. Further, in the region which is brought into contact with the mask main body except for the through hole portion or the ultrathin portion of the mask, there is no migration of the alkali ion and the like toward the negative-electrode-side, or an amount and a migration length of ion to be migrated are extremely small, so that the low alkali concentration region is not formed, or the region whose depth is extremely shallow is formed. Therefore, by the surface treatment of the second embodiment, the glass plate in which the low alkali concentration regions in the pattern corresponding to the pattern of the through hole portions or the ultrathin portions of the mask are formed in the surface layer portion of one main surface side of the glass plate is obtained. Hereinafter, the pattern of the low alkali concentration regions formed on the glass plate will be further described.

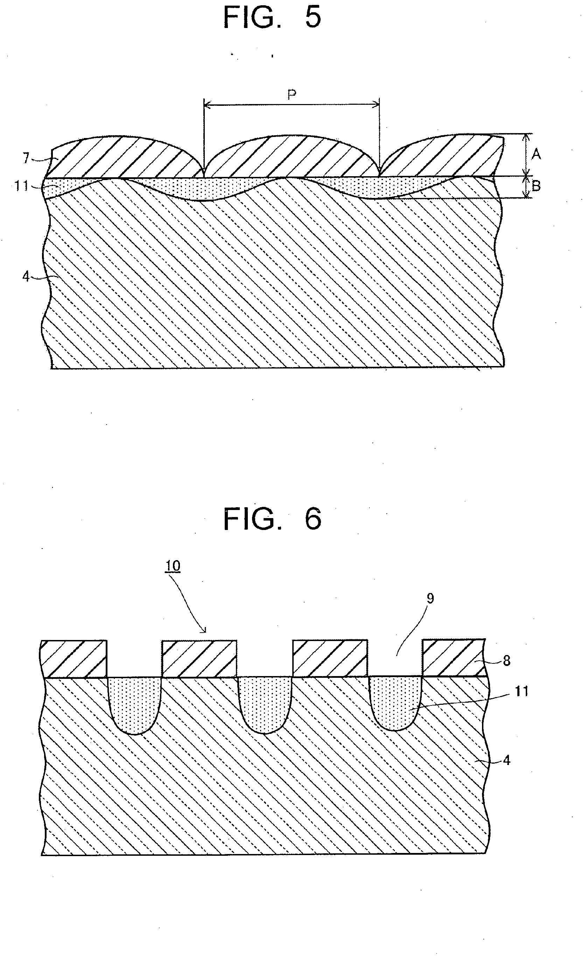

When the mask 7 in FIG. 3 made of the azobenzene resin and formed in the L/S pattern form with the predetermined pitch P is used, there are formed, in the surface layer portion of the glass plate 4 on the mask formation side, low alkali concentration regions 11 at the pitch P same as the pitch of the ultrathin portions of the mask 7, with a thickness changed periodically and continuously, by corresponding to a change in the thickness of the mask 7, as illustrated in FIG. 5. More concretely, in the region which is brought into contact with a portion at which the thickness of the mask 7 is the maximum, the thickness of the low alkali concentration region 11 corresponding to a depth from the surface of the glass plate 4 to a bottom boundary portion of the low alkali concentration region 11 is the minimum, and becomes 0 µm, for example. In the region corresponding to the ultrathin portion at which the thickness of the mask 7 is the minimum, which is approximately 0 µm, the thickness of the low alkali concentration region 11 becomes the maximum, which is 0.45 µm, for example. As above, the low alkali concentration region 11 whose thickness changes continuously, is formed As above, in the surface layer portion on one main surface side of the glass plate 4, the low alkali concentration region 11 having a sufficient thickness B is formed in the region corresponding to the ultrathin portion being the surface concave portion at which the thickness of the mask 7 is equal to or less than the predetermined value, and in the other region, the low alkali concentration region 11 is formed to have a thin thickness, resulting in that the glass plate 4 on which the low alkali concentration regions 11 with different thicknesses are respectively formed in the pattern form is obtained.

Further, when the mask 10 made of the resin film 8 on which the hole portions 9 such as the circular holes are formed in the predetermined pattern as illustrated in FIG. 4 is used, the low alkali concentration regions 11 are formed only in the regions corresponding to the hole portions 9 being the through hole portions of the mask 10 in the surface layer portion of the glass plate 4 on the mask formation side, as illustrated in FIG. 6, so that the low alkali concentration regions 11 in the pattern which is substantially the same as the pattern of the hole portions 9 of the mask 10 are formed.

As described above, in the glass plate obtained by the second embodiment, each of the low alkali concentration regions 11 formed in the pattern form has a thickness of greater than 0 µm and equal to or less than 10 µm. Specifically, the glass plate on which the low alkali concentration regions 11 each having the concentration of sodium ion of 500 ppm or less on molar basis are formed in the regions each having a depth of up to 10 µm from one main surface of the glass plate 4, in the pattern form in the plane direction, is obtained.

Further, in the glass plate after being subjected to the surface treatment as above, the aforementioned low alkali concentration region 11 can have a proton concentration higher than that of the other region. Specifically, by making the atmosphere of the surface treatment to be the atmosphere mainly formed of air or nitrogen and containing proton supply gas such as hydrogen gas as described above, it is possible to inject proton into the low alkali concentration region 11 to increase the proton concentration. The proton concentration can be increased to, for example, 40000 ppm or more on molar basis, although depending on the amount of alkali ion. Further, in the glass plate having the pattern of the low alkali concentration regions 11 in which the proton concentration is increased as above, there is no return of the migrated alkali ion, so that a low alkali ion concentration is maintained in the low alkali concentration regions 11 in the pattern form.

Note that the thicknesses of the mask 7 made of the azobenzene resin described above and the mask 10 made of the resin film 8, and the pitch of the ultrathin portions or the hole portions 9 are not limited to the above-described ranges, and even if the thicknesses and the pitch exceed the ranges thereof, it is possible to form the pattern of the low alkali concentration regions 11.

### (Glass plate obtained by third embodiment)

By the surface treatment of the third embodiment, at least one kind of the positive ion including the alkali ion migrates toward the negative-electrode-side on which the glass plate is brought into contact with the second electrode in the region facing and right below the tip portion of the needle-shaped electrode, in the positive-electrode-side surface layer portion of the glass plate being the object to be treated, resulting in that the low alkali concentration region in which the concentration of at least one kind of the alkali ion is reduced when compared to that before performing the treatment, and thus the concentration becomes lower than that of the other region, is formed. Further, in the region which does not face and which is not right below the tip portion of each of the needle-shaped electrodes, there is no migration of the alkali ion and the like toward the negative-electrode-side almost at all, and thus the low alkali concentration region is not formed almost at all. Therefore, by the surface treatment of the third embodiment, the glass plate having the low alkali concentration regions in the pattern corresponding to the arrangement of the needle-shaped electrodes formed in the surface layer portion on the one main surface side thereof is obtained. Hereinafter, the pattern of the low alkali concentration regions formed on the glass plate will be further described.

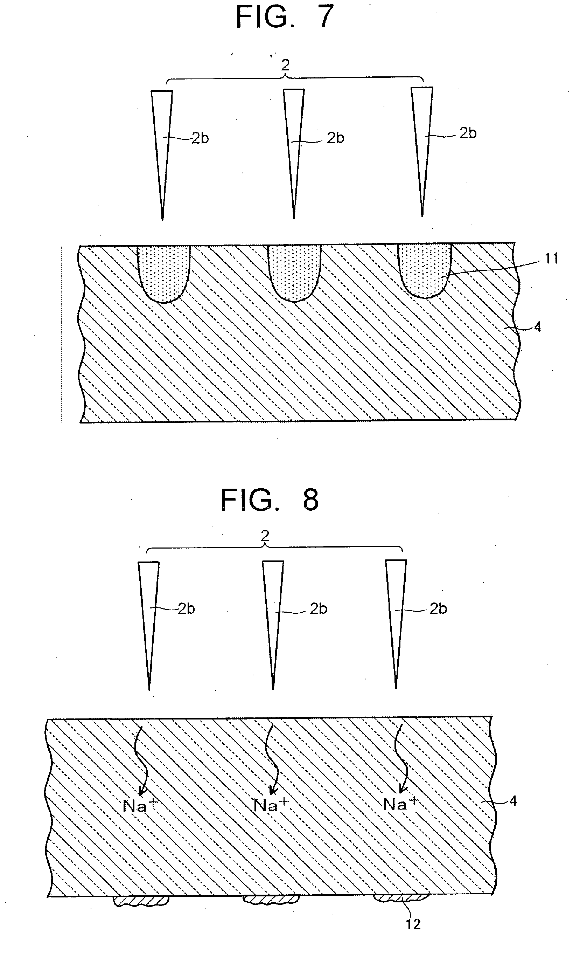

As illustrated in FIG. 7, in the surface layer portion of the glass plate 4 on the positive electrode side, at least one kind of the positive ion including the alkali ion migrates toward the negative-electrode-side on which the glass plate is brought into contact with the second electrode, in the region facing and right below the tip portion of each of the needle-shaped electrodes 2b, resulting in that the low alkali concentration regions 11 each having a circular planar shape in which a point right below the tip of each of the needle-shaped electrodes 2b is set as a center, are formed in the pattern of arrangement same as the arrangement of the needle-shaped electrodes 2b.

In the glass plate 4 obtained by the third embodiment as described above, each of the low alkali concentration regions 11 formed in the pattern form has a thickness of 0.5 µm to 15 µm. Specifically, the glass plate on which the low alkali concentration regions 11 each having the circular planar shape and having the concentration of sodium ion of 500 ppm or less on molar basis are formed in the regions each having a depth of up to 0.5 µm to 15 µm from one main surface of the glass plate 4, in the pattern of arrangement same as the arrangement of the needle-shaped electrodes 2b, which is the pattern of arrangement of zigzag form, for example, is obtained.

Further, in the glass plate after being subjected to the surface treatment as above, the aforementioned low alkali concentration region 11 can be set to have a proton concentration higher than that of the other region. Specifically, by making the atmosphere of the surface treatment to be the atmosphere mainly formed of air, nitrogen, or rare gas, and containing proton supply gas such as hydrogen gas as described above, it is possible to inject proton into the low alkali concentration region 11 to increase the proton concentration. The proton concentration can be increased to, for example, 40000 ppm or more on molar basis, although depending on the amount of alkali ion. Further, in the glass plate 4 having the pattern of the low alkali concentration regions 11 in which the proton concentration is increased as above, there is no return of the migrated alkali ion, so that a low alkali ion concentration is maintained in the low alkali concentration regions 11 in the pattern form.

### EXAMPLES

Hereinafter, examples of the present invention will be concretely described, but, the present invention is not limited to these examples.

### Example 1

A plate made of soda lime glass containing, by mass% based on oxide, 70% of SiO₂, 2% of Al₂O₃, 13% of Na₂O, 10% of CaO, 4% of MgO, and less than 1% of K₂O, Fe₂O₃, and SO₃ in total, having rectangular main surfaces each having a long side of 300 mm and a short side of 100 mm, and having a thickness of 1 mm, was disposed between the first electrode 2 being the positive electrode and the second electrode 3 being the negative electrode in the surface treatment apparatus 1 illustrated in FIG. 1A and FIG. 1B, and the surface treatment by the corona discharge was conducted.

Note that in this surface treatment apparatus 1, the second electrode 3 is a grounded flat plate-shaped electrode, a material of the electrode is tungsten, and a size of the electrode is 300 mm x 100 mm. On the second electrode 3, the above-described glass plate 4 having the same size as that of the second electrode 3 was placed, and the electrode and the plate were horizontally disposed. The first electrode 2 was formed by one piece of wire-shaped electrode 2a whose material was tungsten and whose diameter was 0.5 mm, and was disposed in parallel to the long side of the glass plate 4. Further, a distance between the wire-shaped electrode 2a and the upper surface of the glass plate 4 was set to 5 mm. Further, the second electrode 3 on which the glass plate 4 was placed, was made to reciprocate at a speed of 5 mm/second and a stroke of 100 mm in a direction orthogonal to an arrangement direction of the wire-shaped electrode 2a on a horizontal plane. Further, an atmosphere between the wire-shaped electrode 2a being the first electrode 2 and the second electrode 3 was set to an air atmosphere.

In a manner as above, a voltage of 6 kV was applied by the direct-current power supply 5 between the wire-shaped electrode 2a and the second electrode 3 while heating the glass plate 4 to 200°C, and under this state, the treatment was continued for 900 minutes. Note that when a current value was measured, during the surface treatment, by the ammeter 6 disposed in the circuit connecting the wire-shaped electrode 2a, the second electrode 3, and the direct-current power supply 5, the value was constant at 0.4 mA. Further, a quantity of electricity flowed through the entire treatment area of 30000 mm² of the glass plate 4 was 36 coulombs, and a quantity of electricity per unit area was 120 mC/cm².

When, after the surface treatment was conducted for 900 minutes, a change in the composition in the vicinity of the upper surface of the glass plate 4 was measured by the time-of-flight secondary ion mass spectrometry, it was found out that the low alkali concentration region in which the concentration of sodium ion was 500 ppm or less on molar basis was formed on the glass plate with a depth of up to 550 nm from the surface. Note that in the time-of-flight secondary ion mass spectrometry (ToF-SIMS), a pixel size being a spatial resolution was set to 150 nm in the XY direction, and 22 nm in the Z direction in the glass.

### Example 2

A plate made of soda lime glass having a composition same as that of the plate used in the example 1, having rectangular main surfaces each having a size of 72.8 mm x 72.8 mm, and having a thickness of 1 mm, was disposed between the first electrode 2 being the positive electrode and the second electrode 3 being the negative electrode in the surface treatment apparatus illustrated in FIG. 2A and FIG. 2B, and the surface treatment was conducted.

Note that in this surface treatment apparatus, the second electrode being the negative electrode is a grounded flat plate-shaped electrode, a material of the electrode is a stainless steel, and a size of the electrode is 72.8 mm x 72.8 mm. On the second electrode 3, the above-described glass plate 4 was placed, and the electrode and the plate were horizontally disposed. Further, 138 pieces of needle-shaped electrodes 2b each having a diameter of root of 1 mm and disposed in a zigzag form with an interval d of 10 mm provided therebetween, were set as the first electrode 2, and the first electrode 2 as above was disposed in a manner that the tip portions of the respective needle-shaped electrodes 2b were directed to the above-described glass plate 4 and became vertical with respect to the main surface of the glass plate 4. Note that as the needle-shaped electrode 2b, one obtained by coating a needle-shaped body made of a carbon steel with a chromium coat having a thickness of 0.05 µm by a sputtering method as a base coat, and then coating a platinum coat having a thickness of 1 µm, was used. Further, a distance between each of the needle-shaped electrodes 2b and the upper surface of the glass plate 4 was set to 1 mm.

Subsequently, the first electrode 2 as above and the above-described second electrode 3 were connected to the direct-current power supply 5. Further, an atmosphere between the first electrode 2 and the second electrode 3 was set to a mixed gas atmosphere formed of hydrogen gas of 5 volume% and nitrogen gas of 95 volume%. Further, the first electrode 2, the second electrode 3, and the glass plate 4 in the surface treatment apparatus 1 configured as above were heated to 200°C by using a heating furnace.

In a manner as above, a voltage of 3 kV was applied by the direct-current power supply 5 between the first electrode 2 and the second electrode 3, and under this state, the treatment was continued for 130 minutes. Note that when a current value was measured, during the surface treatment, by the ammeter 6 disposed in the circuit connecting the first electrode 2, the second electrode 3, and the direct-current power supply 5, the value was 0.3 mA at the maximum, and an average current value was 0.25 mA. Further, a quantity of electricity flowed through the entire treatment area of 5308 mm² of the glass plate 4 was 15 coulombs, and a quantity of electricity per unit area was 282.6 mC/cm².

When, after the surface treatment was conducted for 130 minutes, a change in the composition in the vicinity of the upper surface of the glass plate 4 was measured by the ToF-SIMS, similar to the example 1, it was found out that the low alkali concentration region in which the concentration of sodium ion was 500 ppm or less on molar basis was formed on the glass plate with a depth of up to 2.5 µm from the surface.

### Example 3

On one main surface of a plate made of soda lime glass having a composition same as that of the plate used in the example 1, having rectangular main surfaces each having a size of 25 mm x 25 mm, and having a thickness of 1 mm, a coating solution containing an azobenzene resin was coated by using a spin coat method, and the resultant was dried. Note that the coating solution containing the azobenzene resin was prepared by mixing and dispersing a powder of 0.1 g of side-chain type azobenzene polymer whose trade name was polyamine manufactured by Tri Chemical Laboratories Inc., in cyclohexanone of 0.9 g.

Next, a laser light was irradiated on the obtained coating film, and concaves and convexes in a ridge form were formed on a surface of the film. In a manner as above, a mask having the L/S pattern in which a difference of film thicknesses between the surface convex portion having the maximum film thickness and the surface concave portion having the minimum film thickness was 1 µm, and a pitch was 4 µm, was formed.

Next, the glass plate having the mask formed on the main surface thereof, was disposed between the first electrode 2 being the positive electrode and the second electrode 3 being the negative electrode in the surface treatment apparatus 1 illustrated in FIG. 1A and FIG. 1B so that the surface of the mask faced the first electrode 2, and the surface treatment using the corona discharge was conducted. Hereinafter, the glass plate having the mask formed on the main surface thereof is referred to as "mask-attached glass plate".

In this surface treatment apparatus 1, the second electrode 3 is a grounded flat plate-shaped electrode, a material of the electrode is a stainless steel, and a size of the electrode is 20 mm x 20 mm. On the second electrode 3, the above-described mask-attached glass plate 4 was placed, and the electrode and the plate were horizontally disposed. The first electrode 2 was formed by one piece of wire-shaped electrode 2a whose material was tantalum and whose diameter was 0.5 mm, and was disposed in parallel to the long side of the glass plate 4. Further, a distance between the wire-shaped electrode 2a and an upper surface of the mask 11 was set to 5 mm, and an atmosphere between the wire-shaped electrode 2a being the first electrode 2 and the second electrode 3 was set to an air atmosphere.

In a manner as above, a voltage of 6 kV was applied by the direct-current power supply 5 between the wire-shaped electrode 2a and the second electrode 3 while heating the glass plate 4 to 135°C, and under this state, the treatment was continued for 24 hours. Note that when a current value was measured, during the surface treatment, by the ammeter 6 disposed in the circuit connecting the wire-shaped electrode 2a, the second electrode 3, and the direct-current power supply 5, the value was constant at 5 µA. Further, a quantity of electricity flowed through the entire treatment area of 400 mm² of the glass plate 4 was 432 mC, and a quantity of electricity per unit area was 108 mC/cm².

When, after the surface treatment was conducted for 24 hours, a change in the composition in the vicinity of the upper surface of the mask-attached glass plate 4 was measured by the ToF-SIMS, similar to the example 1, it was found out that the low alkali concentration regions each having a concentration of sodium ion of 500 ppm or less on molar basis were formed in the pattern form as will be described below. Specifically, it was found out that there was formed the pattern of the low alkali concentration regions having a thickness changed periodically, at the pitch of 4 µm same as that of the mask, in a manner that the thickness of the low alkali concentration region became 0 nm, being the minimum thickness, in the region of the glass plate which was brought into contact with the portion at which the thickness of the mask was 1 µm, being the maximum thickness, and the thickness of the low alkali concentration region became 450 nm, being the maximum thickness, in the region corresponding to the portion at which the thickness of the mask was approximately 0 µm, being the minimum thickness, in accordance with the continuous and periodical change in the thickness of the mask.

### Example 4

A mask made of a fluorocarbon resin film whose single surface was subjected to adhesion treatment, whose thickness was 0.13 mm, and whose trade name was NITOFLON manufactured by Nitto Denko Corporation, having a pattern of circular holes with a large number of holes formed in a predetermined pattern, was disposed so as to be brought into contact with one main surface of a plate made of soda lime glass having a composition same as that of the plate used in the example 1, having rectangular main surfaces each having a size of 25 mm x 25 mm, and having a thickness of 1 mm. Note that in this mask, the pattern of circular holes corresponds to a pattern in which a large number of circular holes each having a diameter of 5 mm were arranged in a zigzag form at a pitch of 10 mm.

Next, the glass plate having the mask made of the fluorocarbon resin film disposed on the main surface thereof as above, was disposed between the first electrode 2 being the positive electrode and the second electrode 3 being the negative electrode in the surface treatment apparatus 1 illustrated in FIG. 1A and FIG. 1B so that an upper surface of the mask faced the first electrode 2 being the positive electrode, and the surface treatment by the corona discharge was conducted.

Note that in this surface treatment apparatus 1, the second electrode 3 is a grounded flat plate-shaped electrode, a material of the electrode is a stainless steel, and a size of the electrode is 20 mm x 20 mm. On the second electrode 3, the glass plate 4 on which the above-described mask was disposed was placed, and the electrode and the plate were horizontally disposed. The first electrode 2 was formed by one piece of wire-shaped electrode 2a whose material was platinum and whose diameter was 0.5 mm, and was disposed in parallel to the long side of the glass plate 4 by setting a distance between the electrode and the upper surface of the mask to 10 mm. Further, the second electrode 3 on which the glass plate 4 was placed, was made to reciprocate at a speed of 5 mm/second and a stroke of 100 mm in a direction orthogonal to an arrangement direction of the wire-shaped electrode 2a on a horizontal plane. An atmosphere between the wire-shaped electrode 2a being the first electrode 2 and the second electrode 3 was set to an air atmosphere.

In a manner as above, a voltage of 6 kV was applied by the direct-current power supply 5 between the wire-shaped electrode 2a and the second electrode 3 while heating the glass plate 4 to 200°C, and under this state, the treatment was continued for 24 hours. Note that when a current value was measured, during the surface treatment, by the ammeter 6 disposed in the circuit connecting the wire-shaped electrode 2a, the second electrode 3, and the direct-current power supply 5, the value was constant at 5 µA. Further, a quantity of electricity flowed through the entire treatment area of 400 mm² of the glass plate 4 was 432 mC, and a quantity of electricity per unit area was 108 mC/cm².

When, after the surface treatment was conducted for 24 hours, a state of the lower surface of the glass plate 4 which was brought into contact with the second electrode 3 was observed by the naked eye, a pattern of white and circular shapes same as the pattern of circular holes of the mask was recognized Specifically, on the lower surface of the glass plate 4, white precipitate layers each having a size same as that of the circular hole and having a circular planar shape, were observed at positions corresponding to positions right below the circular holes of the mask, and on the entire lower surface of the glass plate 4, the circular white precipitate layers were arranged in the zigzag form same as the pattern of circular holes of the mask. Further, when a chemical composition of the precipitate was analyzed, it was found out to be sodium carbonate.

The precipitation of sodium carbonate indicates the following fact. Specifically, by a migration of sodium ion from the vicinity of the upper surface, close to the first electrode 2, of the glass plate 4 to the lower surface side, close to the second electrode 3, of the glass plate 4, a high concentration region of sodium ion was formed in an exposed manner on the lower surface of the glass plate 4, and in the high concentration region, the sodium ion reacted with carbon dioxide in the air, resulting in that the above-described sodium carbonate was generated.

Since the white precipitate layers in the pattern same as the pattern of circular holes of the mask were formed on the lower surface of the glass plate 4 as described above, it was confirmed that in the regions, corresponding to the hole portions of the mask, in the positive-electrode-side surface layer portion of the glass plate 4, the migration of sodium ions toward the second electrode 3 side occurred, but, in the mask main body portion other than the hole portions, the migration of sodium ions did not occur almost at all, resulting in that the low alkali concentration regions in the pattern same as the pattern of circular holes of the mask were formed.

### Example 5

A plate made of glass for chemical strengthening which was made based on aluminosilicate glass and whose trade name was Dragontrail manufactured by ASAHI GLASS CO., LTD., having rectangular main surfaces each having a size of 100 mm x 100 mm, and having a thickness of 1 mm, was prepared, and on one main surface of the plate, a mask made of a fluorocarbon resin film whose single surface was subjected to adhesion treatment, whose thickness was 0.13 mm, and whose trade name was NITOFLON manufactured by Nitto Denko Corporation, having a pattern of circular holes in which a large number of circular holes each having a diameter of 5 mm were arranged in a zigzag form at a pitch of 10 mm, was disposed.

Next, the glass plate having the mask made of the fluorocarbon resin film disposed on the main surface thereof as above, was disposed between the first electrode 2 being the positive electrode and the second electrode 3 being the negative electrode in the surface treatment apparatus 1 illustrated in FIG. 1A and FIG. 1B so that an upper surface of the mask faced the first electrode 2, and the surface treatment by the corona discharge was conducted.

Note that in this surface treatment apparatus 1, the second electrode 3 is a grounded flat plate-shaped electrode, a material of the electrode is aluminum, and a size of the electrode is 90 mm x 90 mm. On the second electrode 3, the glass plate 4 on which the above-described mask was disposed was placed, and the electrode and the plate were horizontally disposed. The first electrode 2 was formed by disposing three pieces of wire-shaped electrodes 2a each made of a material of platinum and having a diameter of 50 µm so that a distance between the electrodes became 10 mm, and these electrodes were disposed in parallel to the long side of the glass plate 4. Further, a distance between these wire-shaped electrodes 2a and the upper surface of the mask was set to 10 mm. Subsequently, the second electrode 3 on which the glass plate 4 was placed, was made to reciprocate at a speed of 5 mm/second and a stroke of 100 mm in a direction orthogonal to an arrangement direction of the wire-shaped electrodes 2a on a horizontal plane. Further, an atmosphere between the wire-shaped electrodes 2a being the first electrode 2 and the second electrode 3 was set to an air atmosphere.

In a manner as above, a voltage of 6 kV was applied by the direct-current power supply 5 between the first electrode 2 and the second electrode 3 while heating the glass plate 4 to 200°C, and under this state, the treatment was continued for 24 hours. Note that when a current value was measured, during the surface treatment, by the ammeter 6 disposed in the circuit connecting the first electrode 2, the second electrode 3, and the direct-current power supply 5, the value was constant at 100 µA. Further, a quantity of electricity flowed through the entire treatment area of 8100 mm² of the glass plate 4 was 8.64 C, and a quantity of electricity per unit area was 107 mC/cm². Further, a current value when the surface treatment was conducted under conditions same as those of the example 5 except that the mask was not disposed on the glass plate 4, was 400 µA, and it was confirmed that when the mask was disposed, the value of current flowing through the circuit was drastically reduced.

When, after the surface treatment was conducted for 24 hours, a state of the lower surface of the glass plate 4 which was brought into contact with the second electrode 3 was observed by the naked eye, white precipitate layers similar to those of the example 4 were observed, and the precipitate was confirmed to be sodium carbonate through an analysis.
As described above, also in the example 5, the low alkali concentration regions were formed, similar to the example 4.

### Example 6

A plate made of soda lime glass having a composition same as that of the plate used in the example 1, having rectangular main surfaces each having a size of 100 mm x 100 mm, and having a thickness of 1 mm, was disposed between the first electrode 2 being the positive electrode and the second electrode 3 being the negative electrode in the surface treatment apparatus 1 illustrated in FIG. 2A and FIG. 2B, and the surface treatment was conducted.

Note that in this surface treatment apparatus 1, the second electrode 3 being the negative electrode is a grounded flat plate-shaped electrode, a material of the electrode is carbon, and a size of the electrode is 98 mm x 98 mm. On the second electrode 3, the above-described glass plate 4 was placed, and the electrode and the plate were horizontally disposed. Further, 130 pieces of needle-shaped electrodes 2b each having a diameter of root of 1 mm and an angle of a tip portion of 9 degrees and disposed in a zigzag form with an interval d of 10 mm provided therebetween, were set as the first electrode 2, and the first electrode 2 as above was disposed in a manner that the tip portions of the respective needle-shaped electrodes 2b were directed to the above-described glass plate 4 and became vertical with respect to the main surface of the glass plate 4. Note that as the needle-shaped electrode 2b, one obtained by coating a needle-shaped body made of a stainless steel with a chromium coat having a thickness of 0.05 µm by a sputtering method as a base coat, and then coating a platinum coat having a thickness of 1 µm, was used. Further, a distance between each of the needle-shaped electrodes 2b and the upper surface of the glass plate 4 was set to 3 mm.

Further, the first electrode 2 as above and the above-described second electrode 3 were connected to the direct-current power supply 5. Further, an atmosphere between the first electrode 2 and the second electrode 3 was set to a mixed gas atmosphere formed of hydrogen gas of 5 volume% and nitrogen gas of 95 volume%. Further, the first electrode 2, the second electrode 3, and the glass plate 4 in the surface treatment apparatus 1 configured as above were heated to 200°C by using a heating furnace.

In a manner as above, a voltage of 3 kV was applied by the direct-current power supply 5 between the first electrode 2 and the second electrode 3, and under this state, the treatment was continued for 120 minutes. Note that when a current value was measured, during the surface treatment, by the ammeter 6 disposed in the circuit connecting the first electrode 2, the second electrode 3, and the direct-current power supply 5, to thereby determine a current value per one piece of needle-shaped electrode, the current value per one piece of needle-shaped electrode was 30 µA/piece at the maximum, and an average current value was 20 µA/piece. Further, a quantity of electricity flowed through the entire treatment area of 100 cm² of the glass plate 4 was about 180 C, and a quantity of electricity per unit area was about 1.8 C/cm².

When, after the surface treatment was conducted for 120 minutes, a state of the lower surface of the glass plate 4 which was brought into contact with the second electrode 3 was observed by the naked eye, a pattern of white circular shapes whose arrangement was the same as the arrangement of the needle-shaped electrodes 2b being the first electrode was recognized. Specifically, on the lower surface of the glass plate 4, white precipitate layers 12 each having a substantially circular planar shape, were observed at positions corresponding to positions right below the tip portions of the needle-shaped electrodes 2b, and on the entire lower surface of the glass plate 4, the circular white precipitate layers 12 were arranged in the zigzag form being the arrangement same as the arrangement of the needle-shaped electrodes 2b. Further, when a chemical composition of the precipitate was analyzed, it was found out to be sodium carbonate.

The precipitation of sodium carbonate indicates the following fact. Specifically, by a migration of sodium ions from the vicinity of the upper surface, close to the needle-shaped electrodes 2b, to the lower surface side close to the second electrode, in the regions facing and right below the tip portions of the needle-shaped electrodes 2b of the glass plate 4, high concentration regions of sodium ions were formed in an exposed manner on the lower surface of the glass plate 4, and in each of the high concentration regions, the sodium ion reacted with carbon dioxide in the air, resulting in that the above-described sodium carbonate was generated.

Since the pattern of the white precipitate layers 12 arranged in the zigzag form whose arrangement was the same as the arrangement of the needle-shaped electrodes 2b was formed on the lower surface of the glass plate 4 as described above, the following fact was confirmed. Specifically, it was confirmed that in the region facing and right below the tip portion of each of the needle-shaped electrodes 2b, in the positive-electrode-side surface layer portion of the glass plate 4, the migration of sodium ion toward the second electrode side occurred, but, in a region, such as a region around this region, which did not face and which was not right below the tip portion of each of the needle-shaped electrodes 2b, the migration of sodium ion did not occur almost at all, resulting in that the pattern of low alkali concentration regions whose arrangement was the same as the arrangement of the needle-shaped electrodes 2b was formed.

### INDUSTRIAL APPLICABILITY

According to the present invention, it is possible to form a sufficiently thick low alkali concentration region in a surface layer portion of a glass plate. Therefore, it is possible to provide a highly-reliable glass plate capable of preventing an elution of an alkali ion and the like to the surface of glass, capable of preventing a dimming of glass and a deterioration of coating, and capable of preventing a contamination and the like of a semiconductor.

Further, according to the present invention, it is possible to form sufficiently thick low alkali concentration regions in a surface layer portion of a glass plate in a pattern form Therefore, it is possible to provide a glass plate capable of changing a chemically strengthening level on a glass surface depending on an arbitrary portion, for example.

## Claims

1. A surface treatment method of a glass substrate, comprising:
disposing a glass substrate having a pair of main surfaces and being made of glass containing an alkali oxide in a chemical composition, between a first electrode and a second electrode so that one main surface is separated from the first electrode and the other main surface is brought into contact with the second electrode; and
generating a corona discharge by applying a direct-current voltage by making the first electrode to be a positive electrode or a negative electrode and making the second electrode have a polarity opposite to that of the first electrode, to make at least one kind of a positive ion including an alkali ion migrate toward a side close to the negative electrode, in a positive-electrode-side surface layer portion, close to the positive electrode, of the glass substrate.

2. The surface treatment method of the glass substrate according to claim 1, wherein the direct-current voltage is applied by making the first electrode to be the positive electrode, and making the second electrode to be the negative electrode to generate the corona discharge, and in the positive-electrode-side surface layer portion, close to the first electrode, of the glass substrate, at least one kind of the positive ion including the alkali ion is made to migrate toward the negative-electrode-side on which the glass substrate is brought into contact with the second electrode.

3. The surface treatment method of the glass substrate according to claim 1 or 2, wherein the positive electrode has an electrode area smaller than that of the negative electrode.

4. The surface treatment method of the glass substrate according to claim 3, wherein the positive electrode is a wire-shaped electrode, and the wire-shaped electrode is disposed in parallel to the one main surface of the glass substrate.

5. The surface treatment method of the glass substrate according to claim 3, wherein the positive electrode is a needle-shaped electrode, and the needle-shaped electrode is disposed vertically with respect to the one main surface of the glass substrate.

6. A surface treatment method of a glass substrate, comprising:
arranging a mask made of an insulating material and having through hole portions or ultrathin portions with a predetermined pattern, on one main surface of a glass substrate having a pair of main surfaces and containing an alkali oxide in a chemical composition; and
generating a corona discharge by applying a direct-current voltage by making a first electrode to be a positive electrode and making a second electrode to be a negative electrode, after disposing the glass substrate on which the mask is arranged, between the first electrode and the second electrode to make a surface of the mask to be separated from the first electrode, and to make the other main surface of the glass substrate to be brought into contact with the second electrode,
wherein, in the generation of the corona discharge, at least one kind of a positive ion including an alkali ion is made to migrate toward a negative-electrode-side on which the glass substrate is brought into contact with the second electrode, in regions, corresponding to the through hole portions or the ultrathin portions of the mask, in a positive-electrode-side surface layer portion, close to the first electrode, of the glass substrate, and low alkali concentration regions each having a content ratio of at least one kind of the positive ion lower than that of the other region, are formed in a pattern corresponding to the pattern of the through hole portions or the ultrathin portions of the mask.

7. The surface treatment method of the glass substrate according to claim 6, wherein the mask is a resin layer having a concave and convex pattern formed on a surface thereof at a predetermined pitch.

8. The surface treatment method of the glass substrate according to claim 6, wherein the mask is a resin film on which a plurality of through holes are formed in a predetermined pattern.

9. The surface treatment method of the glass substrate according to any one of claims 6 to 8, wherein the first electrode has an electrode area smaller than that of the second electrode.

10. The surface treatment method of the glass substrate according to claim 9, wherein the first electrode is a wire-shaped electrode, and the wire-shaped electrode is disposed in parallel to the one main surface of the glass substrate.

11. The surface treatment method of the glass substrate according to any one of claims 2 to 10, wherein the second electrode and the glass substrate are integrally formed, and made to make movement in parallel with respect to the first electrode.

12. The surface treatment method of the glass substrate according to claim 11, wherein the movement includes at least one kind of movement selected from a linear movement, a linear reciprocating movement, a rotary movement, and a swinging movement.

13. A surface treatment method of a glass substrate, comprising:
disposing a glass substrate having a pair of main surfaces and containing an alkali oxide in a chemical composition between a first electrode formed of a plurality of pieces of needle-shaped electrodes disposed in the same direction with a predetermined interval provided therebetween and at a predetermined arrangement, and a second electrode to make one of the main surfaces to be vertical with respect to the needle-shaped electrodes forming the first electrode and make the one of the main surfaces to be separated from tip portions of the needle-shaped electrodes, and to make the other main surface to be brought into contact with the second electrode; and
generating a corona discharge by applying a direct-current voltage by making the first electrode to be a positive electrode and making the second electrode to be a negative electrode, wherein, in the generation of the corona discharge, in regions, facing the tip portions of the respective needle-shaped electrodes, in a positive-electrode-side surface layer portion, close to the first electrode, of the glass substrate, at least one kind of a positive ion including an alkali ion is made to migrate toward a negative-electrode-side on which the glass substrate is brought into contact with the second electrode, and low alkali concentration regions each having a content ratio of at least one kind of the positive ion lower than that of the other region, are formed in a pattern corresponding to the arrangement of the needle-shaped electrodes.

14. The surface treatment method of the glass substrate according to claim 13, wherein a tip angle being an angle of the tip portion of the needle-shaped electrode is 5 degrees to 25 degrees.

15. The surface treatment method of the glass according to claim 13 or 14,
wherein the second electrode is an electrode made of a molten metal.

16. The surface treatment method of the glass substrate according to any one of claims 1 to 15, wherein an atmosphere between the first electrode and the second electrode is maintained in the atmosphere mainly formed of air or nitrogen.

17. The surface treatment method of the glass substrate according to any one of claims 1 to 15, wherein an atmosphere between the first electrode and the second electrode is maintained in the atmosphere containing a gas generating hydrogen ion.

18. The surface treatment method of the glass according to claim 17,
wherein the gas generating hydrogen ion is hydrogen gas.

19. The surface treatment method of the glass according to any one of claims 1 to 18, wherein a temperature of the glass substrate is a room temperature to 400°C.

20. The surface treatment method of the glass according to any one of claims 1 to 19, wherein the glass substrate is made of glass containing an alkali oxide and an alkali earth oxide whose ratio in total exceeds 15 mass%.

21. A glass substrate being a glass substrate having a pair of main surfaces and being made of glass containing, in its composition, an alkali oxide and an alkali earth oxide whose ratio in total exceeds 15 mass%, comprising
a low alkali concentration region in which a content ratio of at least one kind of an alkali ion is lower than that of the other region, in a surface layer portion on a side of one of the main surfaces.

22. The glass substrate according to claim 21,
wherein a thickness of the low alkali concentration region is greater than 0 µm and equal to or less than 10 µm.

23. The glass substrate according to claim 21,
wherein the low alkali concentration region is formed in a predetermined pattern.

24. The glass substrate according to claim 23,
wherein the low alkali concentration region has a plurality of regions with different thicknesses, and the respective regions are formed in a predetermined pattern in a plane direction of the glass substrate.

25. The glass substrate according to any one of claims 21 to 24,
wherein the low alkali concentration region has a proton concentration higher than that of the other region.
